# EUROPEAN PATENT APPLICATION

(11) **EP 3 597 800 A1**
(43) Date of publication of application: **22.01.2020**
(21) Application number: 18183691.7
(22) Date of filing: 16.07.2018
(51) Int. Cl.: D01F 1/08, D01D 5/247, D01D 5/00, D01F 9/14, D01F 11/12, D01F 11/14, H01M 4/86, H01M 4/90

(54) **ATOMIC METAL- AND N-DOPED OPEN-MESOPOROUS CARBON NANOFIBERS FOR EFFICIENT AND BIO-ADAPTABLE OXYGEN ELECTRODE IN METAL-AIR BATTERIES**

(71) Applicant: Freie Universität Berlin, 14195 Berlin (DE)
(72) Inventor: Cheng, Chong, 14197 Berlin (DE); Haag, Rainer, 12209 Berlin (DE)
(74) Representative: Müller-Boré & Partner Patentanwälte PartG mbB

(57) **Abstract**

The present invention relates to a method for producing atomic metal (M)- and N-doped open-mesoporous carbon nanofibers, atomic M- and N-doped open-mesoporous carbon nanofibers produced by said method, the use of said atomic M- and N-doped open-mesoporous carbon nanofibers as an oxygen electrode for metal-air batteries, and to a metal-air battery comprising the atomic M- and N-doped open-mesoporous carbon nanofibers.

## Description

The present invention relates to a method for producing atomic metal (M)- and N-doped open-mesoporous carbon nanofibers, atomic M- and N-doped open-mesoporous carbon nanofibers produced by said method, the use of said atomic M- and N-doped open-mesoporous carbon nanofibers as an oxygen electrode for metal-air batteries, and to a metal-air battery comprising the atomic M- and N-doped open-mesoporous carbon nanofibers.

With the recently increasing development of lightweight, portable, flexible, and wearable electronics for diverse health and biomedical devices, there is an urgent need to explore new power sources that offer higher flexibility and human/tissue-adaptability for these electronic devices, such as aqueous metal-ion batteries, bio-fuel cells, and metal-air batteries. Among them, the metal-air batteries are considered to be one of the most promising types of power sources due to their high energy capacities, high flexibility, and eco-friendly and low cost fabrication process. Particularly, the liquid, solid, and fiber-shaped Zn-air batteries with alkaline electrolytes have recently gained significant success. However, these alkaline-based Zn-air batteries are not highly adaptable to human body and many bioelectronic/biomedical systems. On the contrary, Mg-air batteries possess potential advantages over their Zn-air batteries counterparts, especially in bioelectronics and biomedical fields. Theoretically, Mg-air batteries are capable of providing high energy density and discharge voltage in neutral condition; meanwhile, the Mg alloy shows good bioresorbability and the produced Mg²⁺ ions show no toxicity towards the environment and the human body. However, the high polarization, low coulombic efficiency, and much lower working voltage than theoretical voltage of these Mg-air batteries during operation limit their widespread application. One of the most important scientific difficulties reducing the performances of Mg-air batteries is the sluggish kinetics of the oxygen reduction reaction (ORR) in the air cathode.

Two aspects have to be considered to improve the current limitation of air cathodes in Mg-air batteries: (i) the intrinsic ORR catalytic activity of the loaded catalysts, and (ii) the configuration and porous structure of the air cathode. The ORR catalytic activity of loaded catalysts (onset and half-wave potentials) determines the working discharge voltage of the batteries. Among currently emerging non-noble metal-based ORR catalysts, both the experimental and theoretical results have demonstrated that atomic metal-Nₓ (x is e.g. from 1 to 6) doped carbon can serve as the most desirable low cost, easy to synthesize, and highly efficient oxygen electrocatalyst. Besides the high ORR catalytic activity, another challenge lies in the mass transport properties of the electrode for rapid ions and air diffusion. Therefore, a combination of the open-mesoporous and interconnected structures in catalyst for improving mass transport properties and the 3D porous channels and networks in cathode for boosting air diffusion is highly desired. With respect to diverse nanostructured porous carbon catalysts, the carbon nanofibers (CNF) exhibit nanoscale diameter, high aspect ratio, interconnected nanofibrous networks for ions and air diffusion, and continuous conductive pathways for electron transport, which thus facilitate the electrocatalytic kinetics of the air cathode. However, these currently reported CNFs mainly show microporous structures, the incorporation of open-mesopores and interconnected channels in CNF via cost-effective and facile method is quite challenging. Consequently, up to now, the scalable synthesis of atomic metal-Nₓ doped CNF-based oxygen electrocatalyst integrated with high ORR catalytic activity, open-mesoporous and interconnected structures, and 3D porous channels and networks for the air cathode has not been realized.

In view of the above, the technical problem underlying the present invention is to provide a method for producing atomic metal (M)- and N-doped open-mesoporous carbon nanofibers, and to provide atomic M- and N-doped open-mesoporous carbon nanofibers, said atomic M- and N-doped open-mesoporous carbon nanofibers being usable as oxygen electrode in metal-air batteries with neutral electrolytes exhibiting high open-circuit voltage, stable discharge voltage plateaus, high capacity, long operating life, and good flexibility.

Therefore, a first aspect of the present invention relates to a method for producing atomic M- and N-doped open-mesoporous carbon nanofibers, comprising the steps of:
(a) providing a polymer and silica nanocluster solution comprising a polymer, silica nanoclusters and a solvent;
(b) electrospinning the polymer and silica nanocluster solution to obtain a polymer-silica nanocluster textile membrane;
(c) carbonization treating the polymer-silica nanocluster textile membrane;
(d) etching the treated polymer-silica nanocluster textile membrane to remove at least a part of the silica nanoclusters to obtain open-mesoporous carbon nanofibers;
(e) absorbing a metal coordinating compound onto the open-mesoporous carbon nanofibers;
(f) adding Zn ions and M ions to form a coating of M-doped coordination framework onto the open-mesoporous carbon nanofibers; and
(g) carbonization treating the coated open-mesoporous carbon nanofibers to obtain atomic M- and N-doped open-mesoporous carbon nanofibers,
wherein M is a metal selected from the group consisting of Fe, Co, Ni, Cu, Mn, Mo, W, Ru, Pd, Ir and Pt; and
wherein the polymer is selected from the group consisting of polyacrylonitrile, polyimide, polyvinyl alcohol and lignin.

Herein, the expressions "atomic metal(-doped)" or "atomic M(-doped)" mean that only single metal ions are coupled onto the nanofibers or doped in the carbon matrix and not aggregates of two or more metal ions.

Herein, the expression "N doped open-mesoporous carbon nanofibers" means that nitrogen atoms (N) are incorporated into the carbon nanofiber network, which may then participate in metal coordination of the atomic M.

The atomic M- and N-doped open-mesoporous carbon nanofibers produced by the method of the present invention represent open-mesoporous carbon nanofibers, onto the surface of which atomic M-Nₓ sites are coupled, wherein "x" is from 1 to 6, preferably from 2 to 5, for example from 3 to 4.

The metal M (herein also sometimes simply referred to as "metal") in the atomic M- and N-doped open-mesoporous carbon nanofibers is selected from the group consisting of Fe, Co, Ni, Cu, Mn, Mo, W, Ru, Pd, Ir and Pt. Accordingly, depending on the individual metal M, atomic M-Nₓ sites are coupled to the open mesoporous carbon nanofibers. According to a preferred embodiment of the present invention, the metal M is Fe, whereby Fe-Nₓ sites are coupled to the open mesoporous carbon nanofibers.

In step (a) of the method of the present invention, a polymer and silica nanocluster solution is provided. The polymer and silica nanocluster solution comprises a polymer, silica nanoclusters and a solvent.

According to the present invention, the polymer is selected from the group consisting of polyacrylonitrile, polyimide, polyvinyl alcohol and lignin. Preferably, a nitrogen-containing polymer is used. By using a nitrogen-containing polymer, N-doped carbon nanofibers can be readily obtained, e.g. without using additional N sources. However, according to the present invention, it is also possible to use polymers which do not contain nitrogen and to add a nitrogen-containing compound such as 2-cyanoguanidine, 2-methylimidazole or melamine, preferably to the polymer and silica nanocluster solution before electro-spinning. This ensures that during the following carbonization treatment, these N species can be doped into the carbon nanofiber. As a further method for introducing nitrogen, NH₃ gas may be used for the carbonization treatment, and then NH₃ will provide nitrogen for N doping the carbon nanofibers at high temperatures. However, according to the present invention, the N doping of the carbon nanofibers may also be achieved by using in step (e) a metal coordinating compound which includes nitrogen so that N doping occurs in the subsequent step (g) of carbonization treating. Accordingly, in view of the above, depending on the mechanism to incorporate N into the carbon nanofiber network, the carbon nanofibers obtained in step (c) or (f) may be N-doped. However, in any case, the carbon nanofibers obtained in step (g) will be N-doped in the sense of the present invention.

The polyacrylonitrile is not particularly limited and e.g. polyacrylonitrile having a weight average molecular weight of from 20,000 to 300,000 g/mol, preferably from 100,000 to 200,000 g/mol, and most preferably from 125,000 g/mol to 175,000 g/mol can be used.

The polyimide is not particularly limited and e.g. a polyimide having a weight average molecular weight of from 20,000 to 300,000 g/mol, preferably from 80,000 to 180,000 g/mol, and most preferably from 100,000 g/mol to 160,000 g/mol can be used.

The polyvinyl alcohol is not particularly limited and e.g. polyvinyl alcohol having a weight average molecular weight of from 20,000 to 300,000 g/mol, preferably from 80,000 to 200,000 g/mol, and most preferably from 110,000 g/mol to 170,000 g/mol can be used.

The lignin is not particularly limited and e.g. lignin having a weight average molecular weight of from 10,000 to 250,000 g/mol, preferably from 10,000 to 150,000 g/mol, and most preferably from 50,000 g/mol to 100,000 g/mol can be used.

According to a particularly preferred embodiment of the present invention, the polymer is polyacrylonitrile.

The polymer and silica nanocluster solution provided in step (a) of the present invention further comprises silica nanoclusters. The silica nanoclusters are not particularly limited, and all types of silica, preferably silica with branched or chain-like aggregates, having preferably a diameter of from 10 to 1000 nm, more preferably from 50 to 500 nm, can be used. According to a preferred embodiment, the silica nanocluster are fumed silica nanocluster, for example commercially available fumed silica nanoclusters "S5505" and "S5130" from Sigma Aldrich.

The polymer and silica nanocluster solution provided in step (a) of the present invention further comprises a solvent. The solvent is not particularly limited, and any solvent which is suitable to dissolve the polymer can be used. According to a preferred embodiment, the solvent is a polar solvent such as DMF (dimethyl formamide), NMP (N-methyl-2-pyrrolidone), DMSO (dimethyl sulfoxide), DMAA (dimethyl acetamide), ethylene carbonate, and sulfolane. According to a preferred embodiment, the solvent in step (a) of the method of the present invention is DMF.

The concentrations of the polymer and the silica nanoclusters in the polymer and silica nanocluster solution are not particularly limited. For example, the concentration of the polymer in the polymer and silica nanocluster solution may be from 1 to 20 % w/v, preferably from 6 to 10 %w/v. The concentration of the silica nanoclusters in the polymer and silica nanocluster solution may for example be from 1 to 40 % w/v, preferably from 5 to 15 %w/v.

According to the present invention, the preparation of the polymer and silica nanocluster solution is not particularly limited. According to a preferred embodiment, the polymer is added to the solvent and then stirred vigorously for about 8 to 16 hours at room temperature. After that, the silica nanoclusters are added and the resulting mixture is again stirred vigorously for about 8 to 16 hours at room temperature to obtain the polymer and silica nanocluster solution.

In step (b) of the method of the present invention, the polymer and silica nanocluster solution of step (a) is electrospun to obtain a polymer-silica nanocluster textile membrane. The electrospinning conditions are not particularly limited, and a person skilled in the art will readily select suitable electrospinning conditions to obtain a polymer-silica nanocluster textile membrane. For example, the polymer and silica nanocluster solution may be placed in an e.g. 12 mL syringe with a stainless steel needle (for example 0.1 to 2.0 mm in diameter). The needle may then be set vertically and the feed speed of the solution may be kept at e.g. 0.2 to 5.0 mL/h. A rotating drum with aluminum foil may be used as the collector, the distance between the needle and drum may e.g. be 4 to 30 cm, and the applied voltage may e.g. be 12 to 30 kV.

After step (b), the method of the present invention optionally comprises a stabilization treatment step, in which the polymer-silica nanocluster textile membrane is heated from room temperature to an elevated temperature and maintained for a certain amount of time at said elevated temperature in air atmosphere. When carried out in an oxygen-containing atmosphere, it is advantageously possible to introduce oxygen into the membrane in the stabilization treatment. This may facilitate the formation of the carbon structures and improve the yield of the carbon nanofibers. Alternatively, the stabilization treatment may also be carried out in Ar, N₂ and/or NH₃ atmosphere. According to a specific embodiment, the polymer-silica nanocluster textile membrane is heated from room temperature to an elevated temperature of from 200 to 400 °C, preferably 250 to 350°C, e.g. at a heating rate of from 1 to 5 °C/min, and is maintained e.g. for 1 to 5 hours at said elevated temperature in air atmosphere.

In step (c) of the method of the present invention, the polymer-silica nanocluster textile membrane is carbonization treated by heating the membrane from room temperature or from the stabilization treatment temperature to an elevated temperature and by maintaining the membrane for a certain amount of time at said elevated temperature in an inert gas atmosphere. According to a preferred embodiment, the polymer-silica nanocluster textile membrane is heated to an elevated temperature of from 600 to 1300 °C, preferably from 800 to 1100 °C, e.g. at a heating rate of from 1 to 10 °C/min, and is maintained e.g. for 0.5 to 10 hours at said elevated temperature in an argon atmosphere. The carbonization treatment is preferably carried out in a tube furnace.

In step (d) of the method of the present invention, the carbonization treated polymer-silica nanocluster textile membrane of step (c) is etched to remove at least a part (i.e. at least 10 %) of the silica nanoclusters to obtain open-mesoporous carbon nanofibers. In case a nitrogen-containing polymer such as polyacrylonitrile is used, the obtained open-mesoporous carbon nanofibers is already N-doped. As already mentioned above, in case the polymer does not contain nitrogen, it is possible to add a nitrogen-containing compound such as 2-cyanoguanidine, 2-methylimidazole or melamine to the polymer and silica nanocluster solution before electro-spinning in step (b), and thus during the carbonization treatment, these N species can be doped into the carbon nanofiber. As a further method for introducing nitrogen, NH₃ gas may be used for the carbonization treatment, and then NH₃ will provide N for doping the carbon nanofibers at high temperatures.

Preferably, at least 25 % of the silica nanoclusters are removed by the etching treatment, more preferably at least 50 %, more preferably at least 75 %, more preferably art least 90 %, more preferably at least 95 %, and even more preferably at least 99 %. According to a particularly preferable embodiment, all of the silica nanoclusters are removed by etching. The more silica nanoclusters are removed, the more porous the carbon nanofibers advantageously will become.

The etching in step (d) is not particularly limited, and a person skilled in the art will readily select suitable etching conditions to remove at least a part of the silica nanoclusters. For example, the etching may be carried out by using NaOH, KOH, HF or NH₄F in a concentration of from 0.1 to 10 M e.g. at a temperature of from 0 to 200 °C e.g. for 0.1 to 100 hours, followed by washing and soaking in deionized water repeatedly, followed by washing with ethanol and drying completely overnight. The open-mesoporous carbon nanofibers obtained after the etching step preferably have a diameter of from 1 to 100 nm, such as 2 to 80 nm or 5 to 70 nm.

In step (e) of the method of the method of the present invention, a metal coordinating compound is absorbed onto the open-mesoporous carbon nanofibers. The metal coordinating compound is not particularly limited as long as said metal coordinating compound is suited to coordinate Zn (ions) and the above-described metal (ions) to form a coating of M-doped coordination framework onto the open-mesoporous carbon nanofibers. According to a preferred embodiment, the metal coordinating compound is selected from the group consisting of imidazoles and derivatives thereof (e.g. 2-methylimidazole, 1-methylimidazole, 4-methylimidazole, 1,2,3-triazole, thiazole, 2-ethylimidazole and 2-methylimidazole-5-carboxaldehyde), terephthalic acid and derivatives thereof (e.g. 2-hydroxyterephthalic acid, 2-aminoterephthalic acid, isophthalic acid, 2,5-dihydroxyterephthalic acid, biphenyl-4,4yterephthalic acid and 2-nitroterephthalic acid), 1,3,5-benzenetricarboxylic acids and derivatives thereof (e.g. 1,2,4-benzenetricarboxylic acid, 1,3,5-tris(4-carboxyphenyl)benzene, 1,2,3-benzenetricarboxylic acid hydrate and 1,2,4,5-benzenetetracarboxylic acid), dopamine hydrochloride and derivatives thereof (e.g. catechol, 3,4-dihydroxy-L-phenylalanine, 3,4-dihydroxyphenylacetic acid and tannic acid), p-phenylenediamine and derivatives thereof (e.g. aniline, o-phenylenediamine, m-phenylenediamine) and dithiooxamide and derivatives thereof (e.g. oxamide, 2-cyanoguanidine). According to a particularly preferred embodiment, the metal coordinating compound is a derivative of imidazole, most preferably 2-methylimidazole. In case of using 2-methylimidazole, the obtained coating of metal-doped coordination framework is a metal-doped zeolitic imidazolate framework coating.

In case no N-containing polymer is used and no secondary N source is added before electrospinning and the carbonisation treating of step (c), an N-containing metal coordinating compound may also be used as the nitrogen source for N doping.

The absorbing step (e) is not particularly limited, and a person skilled in the art will readily select suitable absorbing conditions to absorb the metal coordinating compound onto the open-mesoporous N-doped carbon nanofibers. For example, open-mesoporous N-doped carbon nanofibers may be added to a solvent such as methanol, the metal coordinating compound is added thereto, and the mixture is vigorously stirred for e.g. 15 min to 1 hour to guarantee the absorption of the metal coordinating compound onto the open-mesoporous N-doped carbon nanofibers.

In step (f) of the method of the method of the present invention, Zn ions and non-Zn metal ions are added to form a coating of metal-doped coordination framework onto the open-mesoporous N-doped carbon nanofibers. The non-Zn metal ions M added in step (f) are selected from Fe, Co, Ni, Cu, Mn, Mo, W, Ru, Pd, Ir and Pt (most preferred: Fe), and correspond to the metal (ions) to be doped onto the open-mesoporous carbon nanofibers. The zinc ions are used in the coating of step (f) since zinc (ions) can easily be evaporated at temperatures above 907 °C in the carbonization treating step (g).

In step (f), the Zn ions are added as a salt, such as zinc nitrate, halide, sulfate, acetate, gluconate, molybdate, carbonate, fluoride, phosphate, etc.. According to a preferred embodiment, the Zn ions are added as Zn(NO₃)₂·6H₂O. The metal ions (M) are added as a salt, such as metal nitrates, halides, sulfates, acetates, gluconates, molybdatse, carbonates, fluorides, phosphates, etc.. According to a preferred embodiment, the metal ions (M) are added as nitrates, such as Fe(NO₃)₃·9H₂O. After the addition of both the Zn ions and metal ions, the mixture is preferably stirred at room temperature e.g. for about 1 to 36 hours, such as 6 to 12 hours.

According to a preferred embodiment, the Zn ions and the metal ions (M) are added in a molar ratio (Zn ions : M ions) of from 3:1 to 100:1, more preferably of from 10:1 to 60:1, most preferably of from 30:1 to 50:1. When Zn ions are added as the major component and the metal ions (M) are added as the minor component, Zn and the metal (e.g. Fe) will not form an alloy, and thus during the carbonization treatment of step (g), Zn can function as separator to avoid the formation of metal (e.g. Fe) nanoparticles. Due to this prevention effect of Zn, there will only be single metal-N sites be generated.

In step (g) of the method of the present invention, the coated open-mesoporous N-doped carbon nanofibers are carbonization treated to obtain atomic M- and N-doped open-mesoporous carbon nanofibers. The carbonization treatment is carried out by heating the coated open-mesoporous N-doped carbon nanofibers to an elevated temperature and by maintaining the coated open-mesoporous N-doped carbon nanofibers for a certain amount of time at said elevated temperature in an inert gas atmosphere. According to a preferred embodiment, the coated open-mesoporous N-doped carbon nanofibers are heated to an elevated temperature of from 600 to 1300 °C, preferably from 800 to 1250 °C, most preferably from 910 to 1200 °C at a heating rate e.g. of from 1 to 10 °C/min, and are maintained e.g. for 0.5 to 10 hours at said elevated temperature in an argon atmosphere. The carbonization treatment is preferably carried out in a tube furnace. Due to this carbonization treatment, Zn ions are easily evaporated such that preferably almost no Zn remains in the carbon nanofibers, thereby increasing the porosity in the carbon structures. Moreover, catalytically active atomic metal-Nₓ sites containing the non-Zn metal are formed. Step (g) may be carried out once, twice or multiple times.

A further aspect of the present invention relates to atomic M- and N-doped open-mesoporous carbon nanofibers, which are obtained by the above-described method.

The atomic M- and N-doped open-mesoporous carbon nanofibers preferably have a BET surface area of from 100 to 3000 m²/g, more preferably of from 150 to 800 m²/g, most preferably of from 200 to 600 m²/g. In case the BET surface is too low, the carbon nanofibers may not be porous enough. In case the BET surface area is too high, the graphitic structure of the carbon nanofibers might be destroyed, which might lead to lower conductivity.

According to a preferred embodiment of the present invention, the pore volume of the atomic M- and N-doped open-mesoporous carbon nanofibers is from 0.1 to 20 cm³/g, more preferably from 0.2 to 5 cm³/g, more preferably from 0.5 to 3 cm³/g, such as from 0.8 to 2 cm³/g. In case the pore volume is too low, the carbon nanofibers may not be porous enough. In case the pore volume area is too high, the conductivity might be too low.

Preferably, the mesopores of the atomic M- and N-doped open-mesoporous carbon nanofibers of the present invention have a diameter of from 1 to 100 nm, more preferably of from 5 to 80 nm, such as from 10 to 50 nm. In case the diameter is too low, the mass diffusion properties in the carbon nanofibers might be too slow. In case the diameter is too high, the surface area might be too small and thus the density of catalytic sites might be too small.

The content of N (nitrogen) in the atomic M- and N-doped open-mesoporous carbon nanofibers of the present invention preferably is from 1.0 to 6.0 atom%, more preferably from 2.0 to 5.5 atom%, such as from 3.0 to 5.0 atom%. In case the N content is too low, the catalytic properties of the atomic M- and N-doped open-mesoporous carbon nanofibers might decrease, whereas a N content of more than 6.0 atom% might not lead to a further catalytic improvement.

Further, the content of metal (Fe, Co, Ni, Cu, Mn, Mo, W, Ru, Pd, Ir or Pt) in the atomic M- and N-doped open-mesoporous carbon nanofibers of the present invention preferably is from 0.10 to 5.0 atom%, more preferably from 0.2 to 2.0 atom%, such as from 0.3 to 1.0 atom%. In case the metal content is too low, the catalytic properties of the atomic M- and N-doped open-mesoporous carbon nanofibers might decrease, whereas a metal content of more than 5.0 atom% might lead to aggregation of the metal.

A further aspect of the present invention relates to the use of the atomic M- and N-doped open-mesoporous carbon nanofibers of the present invention as an oxygen electrode in metal-air batteries. The excellent electrocatalytic and battery performances of the atomic M- and N-doped open-mesoporous carbon nanofibers of the present invention as oxygen electrode can be attributed to several factors: (1) the homogeneously coupled atomic metal-Nₓ sites guarantee its good ORR activity and stability; (2) the open-mesoporous and interconnected structures and high specific surface area make the active metal-Nₓ sites fully accessible and also improved the mass transport properties; (3) the 3D hierarchically porous channels and networks in the oxygen electrode significantly increased the air diffusion pathways. Advantageously, metal-air batteries, particularly Mg-air batteries, equipped with the atomic M- and N-doped open-mesoporous carbon nanofibers of the present invention can work efficiently in neutral electrolytes with high open-circuit voltage, stable discharge voltage plateaus, high capacity, long operating life, and good flexibility, which is superior to the state-of-the-art Pt/C equipped batteries.

Accordingly, a further aspect of the present invention relates to a metal-air battery comprising the atomic M- and N-doped open-mesoporous carbon nanofibers of the present invention. The atomic M- and N-doped open-mesoporous carbon nanofibers are preferably used as the oxygen electrode of the metal-air battery, and thus the battery exhibits the aforementioned advantageous effects.

Furthermore, the atomic M- and N-doped open-mesoporous carbon nanofibers of the present invention may advantageously also be used in Li-ions batteries, supercapacitors, electronics, biosensors, and tissue monitoring and regenerations.

In the following examples, the above described invention is further illustrated using polyacrylonitrile as the polymer, Fe as the metal M and 2-methylimidazole as the metal coordinating compound.

### EXAMPLES

The scalable synthesis of atomic Fe-Nₓ sites coupled open-mesoporous N-doped-carbon nanofibers (OM-NCNF-FeNₓ) as advanced oxygen electrode for Mg-air batteries will be described in detail. The main fabrication processes include the electrospinning of polyacrylonitrile (PAN)-branched silica nanocluster solution and a secondary coating and carbonization of Fe-doped zeolitic imidazolate frameworks (ZIF) thin layer, which endow the fabricated nanofibers with an open-mesoporous structure and homogeneously coupled atomic Fe-Nₓ catalytic sites. The OM-NCNF-FeNₓ-based air cathode shows manifold advantages, which include interconnected structures and 3D hierarchically porous networks for ions/air diffusion, good bio-adaptability, and high oxygen electrocatalytic performances for both alkaline and neutral electrolytes. Most importantly, the assembled Mg-air batteries with neutral electrolytes reveal high open-circuit voltage, stable discharge voltage plateaus, high capacity, long operating life, and good flexibility.

Used chemical reagents and materials:
The Fe(NO₃)₃·9H₂O, Zn(NO₃)₂·6H₂O, 2-methylimidazole, Pt-carbon-Alfa, Nafion solution, Mg foil, and NaOH were obtained from Alfa Aesar. Methanol, dimethyl formamide (DMF), polyacrylonitrile (PAN, average M.W. 150,000), branched silica nanoclusters (S5505), monodisperse silica colloid suspension (22 nm, Ludox AS-40), LiCI, polyvinyl alcohol (PVA, Mw 146,000-186,000), and Pt-carbon-Sigma were all purchased from Sigma Aldrich. Dulbecco's phosphate-buffered saline (DPBS, no calcium, no magnesium) and all other chemicals for stem cell culture and viability tests were purchased from Thermofisher. Bare carbon cloth and carbon cloth with polytetrafluoroethylene (PTFE) gas diffusion layer were purchased from Fuelcellstore (USA). Unless otherwise stated, all the reagents were of analytical grade and were used as received. All aqueous solutions were prepared with DI (deionized) water.

### Example 1: Preparation of Atomic Fe-Nₓ Coupled Open-Mesoporous Carbon Nanofibers

### Example 1.1: Nanofibers preparation

As depicted in Figure 1, inspired by the fibrous bufo-spawn structures (spawns are embedded in fibrous strings), the branched silica nanoclusters (cf. Figure 2, 50-450 nm by electron microscopes) are embedded in the PAN (polyacrylonitrile) nanofibrous matrix as pore-forming templates. The silica ratio, solution viscosity, and electrospinning conditions have been optimized to yield the PAN-silica nanocluster-based nanofiber membrane.

In a specific embodiment, 4.0 g polyacrylonitrile (PAN, average M.W. 150,000) were added in 64 mL of dimethyl formamide (DMF) and stirred vigorously for 12 h at room temperature. Then, 3.2 g branched silica nanoclusters were added into the resulting PAN-DMF solution and then further stirred vigorously for 10 h at room temperature to yield the electrospinning solution. Then, the as-prepared PAN-branched silica nanoclusters DMF solution was placed in a 12 mL syringe with a stainless steel needle (0.50 mm in diameter) and electrospun into a PAN-silica nanocluster textile membrane. The needle was set vertically and the feed speed of the solution was kept at 1.5 mL/h. A rotating drum with aluminum foil was used as the collector, the distance between the needle and drum was 10 cm, and the applied voltage was 18 kV.

The control nanofiber, NCNF, was prepared by a similar method, the only difference was 40 mL DMF was used and no silica was added. For the BM-NCNF, 3.2 g monodisperse silica colloid suspension was used instead of branched silica nanoclusters.

For the stabilization and carbonization process, the as-prepared PAN based nanofibers were first thermally treated from room temperature to 300 °C and maintained for 2 h at a heating rate of 1 °C per min in air environment. Then, the stabilized nanofibers were heated to 1000 °C and maintained for 2 h with a heating rate of 5 °C per min under an Ar condition in a tube furnace. The obtained silica-mixed nanofibers were etched for 2 times with 2 M NaOH at 60 °C for 24 h to remove the silica templates completely. Then the OM-NCNF (open-mesoporous N-doped carbon nanofibers) was washed and soaked in DI water repeatedly, and then washed with ethanol and dried completely overnight.

### Example 1.2: OM-NCNF-FeNₓ preparation

To couple highly ORR (oxygen reduction reaction) active atomic Fe-Nₓ sites onto the open-mesoporous OM-NCNF structure, a ZIF-Fe thin layer was coated by sequentially adding OM-NCNF nanofibers with 2-methylimidazole for 30 min, then adding Zn ions and a trace amount of Fe ions in methanol at room temperature for ZIF layer formation. It should be noted that to avoid the formation of large ZIF crystal, the 2-methylimidazole should first assemble with carbonized OM-NCNF nanofibers for 30 min. The carbon nanofibers will then adsorb the 2-methylimidazole on its surface, thus avoiding the formation of large ZIF crystals in the solution. In the synthesis procedure, 320 mg carbonized and etched OM-NCNF sheets (0.5 cm*0.5 cm) were added in 240 ml methanol, then 1.175 g 2-methylimidazole was added into the above solution and then shaken vigorously for 30 min, which guaranteed the adsorption and assembly of 2-methylimidazole on the carbon nanofibers. Then Zn(NO₃)₂·6H₂O (1 g) and Fe(NO₃)₃·9H₂O (34 mg) were added to the nanofiber solution. This ZIF coating reaction system was stirred and maintained at room temperature for 24 h. The final products were washed with methanol and ethanol 3 times, and then dried at 60 °C. Although the generated ZIF-Fe thin layer mainly consisted of Zn-N₄ complexes, tetrahedral Fe-N₄ structures would also form in the ZIF-Fe layer.

The ZIF-Fe thin layer coated OM-NCNF nanosheets were subjected to a thermal activation at a temperature of 1100 °C under Ar flow for 1 h with a heating speed of 5 °C per min in a tube furnace to obtain the final nanofibrous catalyst. No additional acidic leaching is needed, the Zn ions will form Zn metal and evaporated after the temperature exceeds 907 °C. The carbonization temperature was optimized to be 1100 °C. In the carbonization treatment, benefiting from the strong coordination and confined carbonization of ZIF structures, the coupled Fe-N₄ complexes on the OM-NCNF are converted into atomic Fe-Nₓ sites, which is named OM-NCNF-FeNₓ.

To optimize the ORR performance, the above-mentioned OM-NCNF was applied for a secondary thermal treatment after silica etching under 900 °C for 2 h to stabilize and activate the catalytic center. BM-NCNF was obtained by the same carbonization and etching process as OM-NCNF.

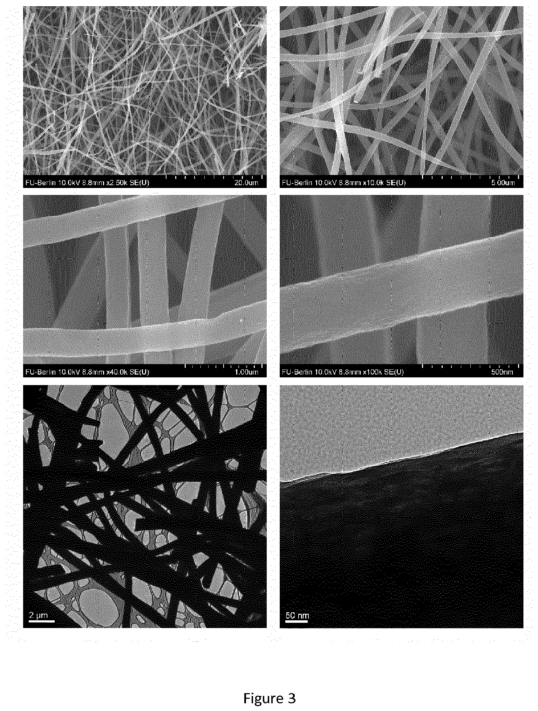

For comparison, N-doped carbon nanofibers (NCNF) without addition of branched silica nanoclusters were fabricated by carbonization these stabilized bare PAN nanofibers under 1000 °C for 2 h under Ar (cf. Figure 3).

### Example 2: Scanning electron microscopy (SEM) observations

The macroscopic morphology and the open-mesoporous structure were observed by scanning electron microscopy (SEM). In particular, the morphology of the nanofibers was observed by ultra-high resolution FE-SEM using Hitachi S-4800. All the carbon nanofiber samples were observed directly without gold coating. For the non-conductive PAN-silica nanocluster nanofibers, the gold coating was deposited with a layer of about 1 nm.

FTIR spectra were recorded using a JASCO spectrometer.

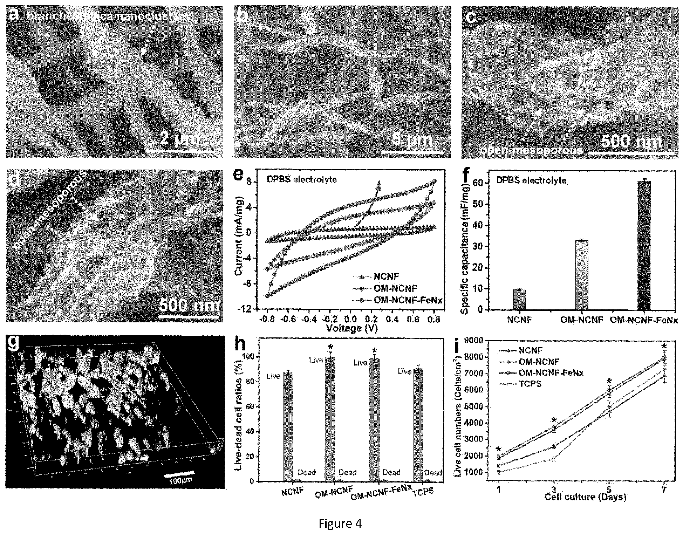

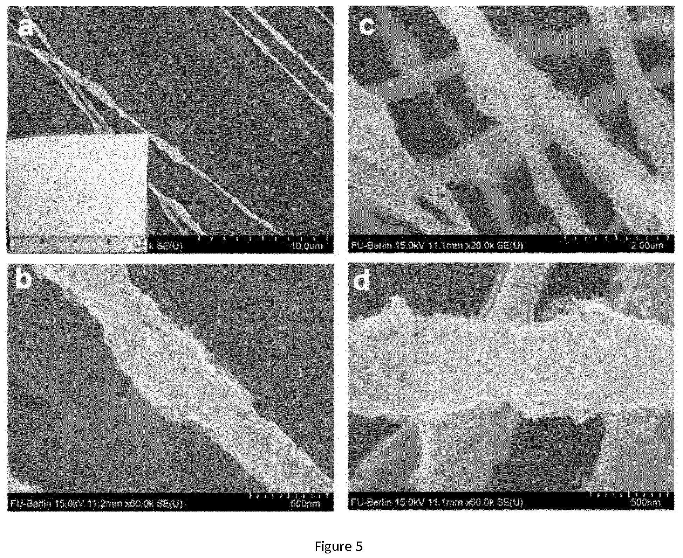

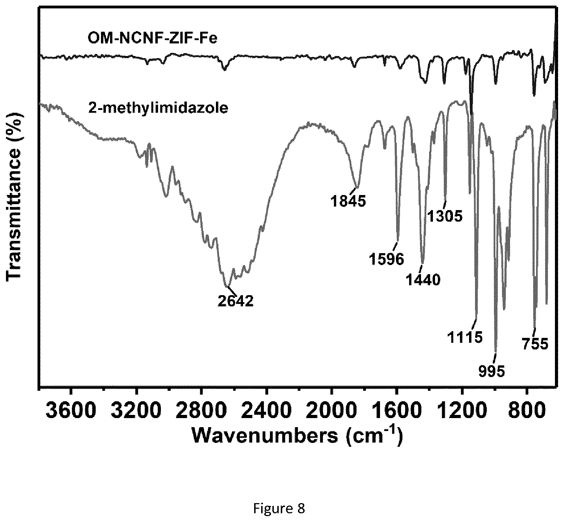

Figures 4a and 5 present the structures of the electrospun PAN-branched silica nanocluster-based composite nanofibers; the branched silica nanoclusters are embedded and confined within the PAN nanofibrous matrix. After carbonization and etching of silica templates, an open-mesoporous 3D nanofibrous and self-standing carbon nonwoven network is formed (cf. Figure 4b and Figures 6 and 7). The high-resolution SEM image, Figure 4c, of the OM-NCNF clearly reveals the hierarchically mesoporous structures (ranging from several to a hundred nanometers in diameter) with fully opened surfaces and interconnected mesopores. The successfully coating of ZIF-Fe thin layer on OM-NCNF was demonstrated by Fourier-transform infrared spectroscopy as shown in Figure 8. It can be observed that the characteristic peaks of 2-methylimidazole at 2642, 1845, 1596, 1440, 1305, 1115, 995, 755 cm⁻¹ can also be detected for the OM-NCNF-ZIF-Fe, the change of peak intensities compared to the 2-methylimidazole are supposed to be caused by the formation of ZIF-Fe structures. This information implies that the successful coating of ZIF-Fe structures on the OM-NCNF.

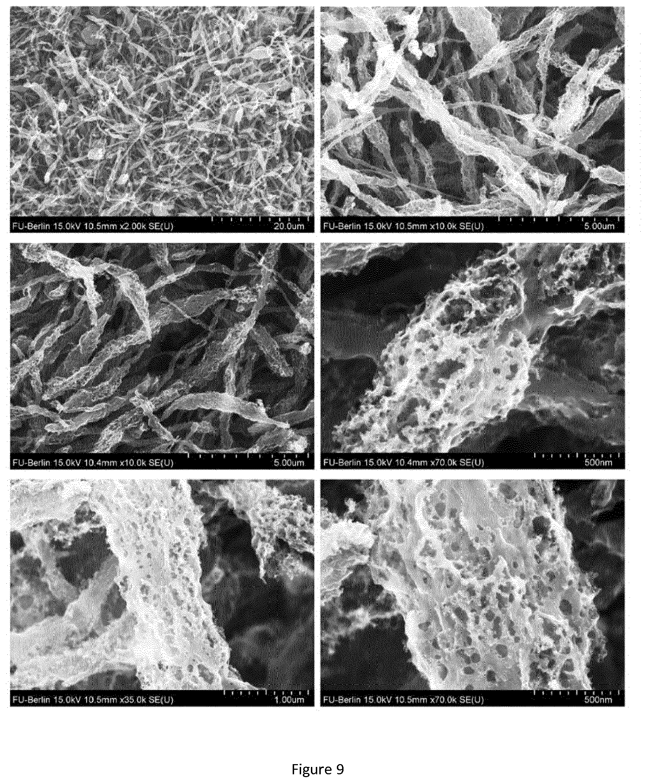

Subsequently, after carbonization of OM-NCNF-ZIF-Fe, Figure 4d and Figure 9 show the SEM images of OM-NCNF-FeNₓ, no isolated carbon nanoparticles derived from large ZIF-Fe crystals can be detected, thus indicating the homogeneous *in-situ* coating of ZIF-Fe thin layer on the porous structures of OM-NCNF.

The open-mesoporous and interconnected structures significantly boosts the mass transport, thus enhancing the electrochemical performance.

### Example 3: Cyclic Voltammetry

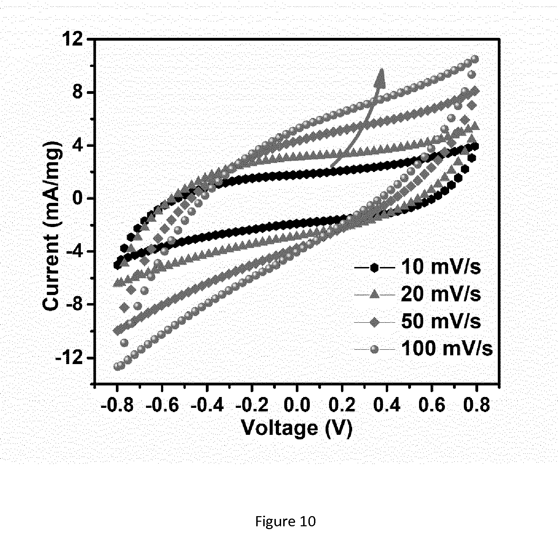

To assess the electrochemical capacitances of OM-NCNF and OM-NCNF-FeNₓ in neutral electrolytes, cyclic voltammetry (CV) of these nanofibers has been performed in Dulbecco's phosphate-buffered saline (DPBS) buffer as shown in Figure 4e and Figure 10. A Gamry electrochemical tester was used for analysis of the cyclic voltammetry with a three-electrode electrochemical cell. The carbon nanofiber based membrane sheets were used as the working electrode, Ag/AgCl as reference electrode, and Pt wire as counter electrode.

Compared to NCNF, the OM-NCNF and OM-NCNF-FeNₓ exhibit much higher electrochemical capacitance, indicating their better ionic conductivity and higher electrical double-layer capacitance than the NCNF. Benefiting from its unique structures, the total cathodic specific capacitance of OM-NCNF-FeNₓ (∼61.5 mF/mg) is about 6.5 times higher than the NCNF (∼9.4 mF/mg) as shown in Figure 4f.

### Example 4: Stem cell culture and cytocompatibility characterizations

To validate that the fabricated OM-NCNF-FeNₓ can be used as bio-adaptable oxygen electrode where electronic-cellular compatibility or tissue adaptability are highly required, the human mesenchymal stem cells (hMSC) have been utilized as an environmentally sensitive cellular system to assess the cytocompatibility of the air cathode.

hMSCs were purchased from Lonza, USA. The necessary approval before carrying out hMSC-related experiments was obtained from the Department of Biology, Chemistry, and Pharmacy, Freie Universität Berlin. The cells were cultured in complete growth medium containing Dulbecco's modified eagle medium (DMEM, Gibco, USA), 10% fetal bovine serum (FBS, Gibco, USA), 1% penicillinstreptomycin (Gibco, USA), and 1% L-glutamine (Gibco, USA). The cells were maintained at 37°C in a saturated humidity atmosphere containing 95% air and 5% CO₂. Upon reaching 70-80% confluency, the cells at P3 were harvested using 0.05% trypsin-EDTA (Invitrogen) and sub-cultured on TCPS and carbon nanofibers for 1, 3, 5, and 7 days.

The viability of cells on substrates was assessed by using a live/dead assay (LIVE/DEAD™ Viability/Cytotoxicity Kit, for mammalian cells, L3224, Invitrogen) per the protocol recommended by the manufacturer. After 30 minutes of sample incubation with the reagents at 37 °C, they were washed with DPBS. The confocal microscope (Leica TCS SP8) was used to obtain the images. Live and dead cells appeared as green and red, respectively. To establish a toxic control, 4% paraformaldehyde was added into the culture media for 20 min to kill and fix the dead cells. After the media was removed and washed for 3 times, a fresh fetal bovine serum contained DMEM media was added to block any possible residual paraformaldehyde. After this, the dead cells on substrates was visualized by using the live/dead kit via confocal microscope.

As shown in Figure 4g, the OM-NCNF-FeNₓ electrode shows excellent stem cell spread and confluence and only a few dead cells are observed, which indicates its good cell compatibility. As shown in Figures 4h and 4i and Figures 11 and 12, the OM-NCNF and OM-NCNF-FeNₓ have significantly higher live cell numbers and a faster cell colonization speed compared to NCNF and tissue culture polystyrene (TCPS) from day 1 to day 7. Therefore, benefiting from its nanofibrous and open-mesoporous carbon structures, the OM-NCNF-FeNₓ electrode not only shows high electrochemical capacitance but also excellent cytocompatibility, which guarantees its application potential in bio-adaptable oxygen electrodes and many other bio-electronic devices, such as biocapacitors, biocircuits, and human sensors.

### Example 5: Transmission electron microscopy (TEM) observations

To identify the detailed porous morphology of OM-NCNF-FeNₓ, transmission electron microscopy (TEM) was performed.

In particular, transmission electron microscopy (TEM), high resolution TEM (HRTEM), high angle annular dark field scanning TEM (HAADF-STEM) and element mapping were performed on a probe-corrected FEI Titan 80-300 S/TEM equipped with a gatan EELS detector. Raman spectra were recorded on a LabRAM HR Evolution Raman microscopes (HORIBA), with excitation laser beam wavelength of 532 nm. The powders were placed on a clean glass substrate that was used for the Raman measurement.

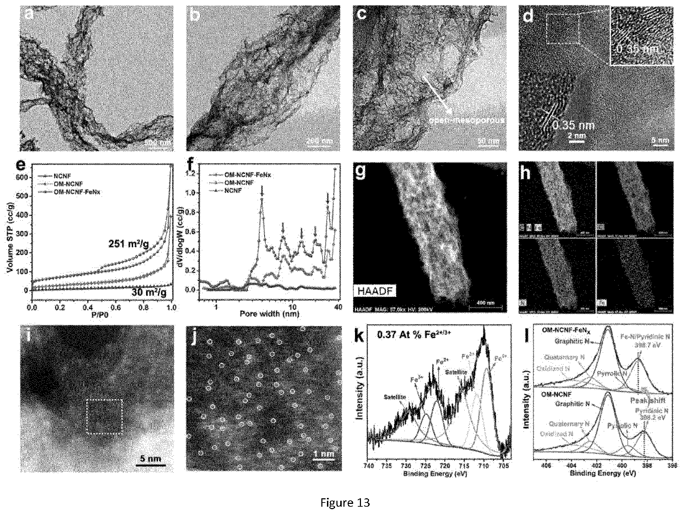

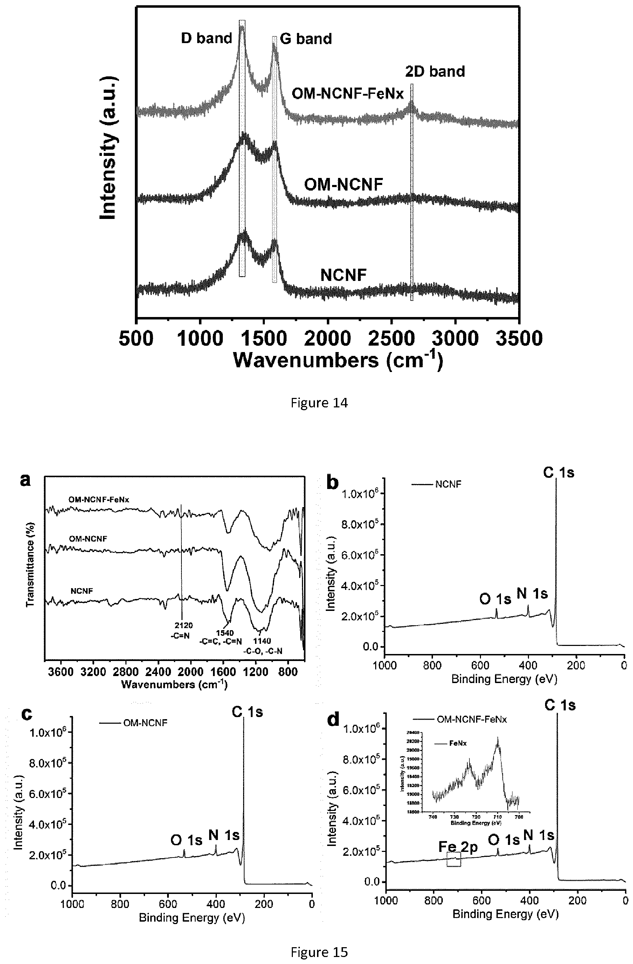

Figures 13a to 13c show that the OM-NCNF-FeNₓ consists of abundant irregular open mesopores and fully interconnected structures. Figure 13d gives the high-resolution TEM (HRTEM) images of the OM-NCNF-FeNₓ, the major domains consist of an amorphous carbon structure; meanwhile, some visible randomly orientated lattice fringes with an inter-planar spacing of ∼ 0.35 nm around the mesopores and nanofiber surface have also been clearly observed, which corresponds to the d spacing of the (002) plane of graphitic carbon. Raman spectra, Figure 14, also confirm that the OM-NCNF-FeNₓ contains both abundant graphitic structure and a large number of defects, which is supposed to be generated by ZIF-Fe thin layer coating and carbonization. These graphitic domains around the pores and nanofiber surfaces may benefit the electron transfer and enhance ORR activity of OM-NCNF-FeNₓ.

### Example 6: Surface area and pore size distribution analysis

N₂ sorption analysis was conducted on a TriStar 3020-accelerated surface area and porosimetry instrument, equipped with automated surface area, at 77 K using Brunauer-Emmett-Teller (BET) calculations for the surface area. The pore size distribution (PSD) plot was recorded from the adsorption branch of the isotherm based on the QSDFT model for spherical pore.

The mesoporous characteristics of these CNFs were further analyzed and compared by nitrogen adsorption measurements (cf. Figure 13e). The calculated Brunauer-Emmett-Teller (BET) surface areas of NCNF, OM-NCNF, and OM-NCNF-FeNₓ are 30, 102, and 251 m²/g, respectively; and the pore volumes are 0.05, 0.61, and 1.02 cm³/g, respectively. These data reveal that the addition of silica template does significantly change the surface area and also increase the pore volumes. The pore size distribution was analyzed by the quenched solid density functional theory (QSDFT) model to calculate the micropore and mesopore sizes separately (cf. Figure 13f). Both OM-NCNF and OM-NCNF-FeNₓ show abundant mesopores with a large size distribution from 2 to 40 nm, reflecting the broad size distribution of the branched silica nanocluster templates. Furthermore, some micropore structures are identified for OM-NCNF-FeNₓ, which should be attributed to the carbonization of ZIF-Fe thin layers and evaporation of metallic Zn. In contrast, the NCNF hardly shows any pores both in the micropore and mesopore regions.

### Example 7: High angle annular dark-field scanning transmission electron microscopy (HAADF-STEM) observations

High angle annular dark field scanning TEM (HAADF-STEM) were performed on a probe-corrected FEI Titan 80-300 S/TEM equipped with a gatan EELS detector.

High angle annular dark-field scanning transmission electron microscopy (HAADF-STEM) was performed to detect element distribution and identify the Fe-Nₓ sites. The HAADF-STEM image (cf. Figure 13g) and corresponding elemental mapping of C, N, and Fe (cf. Figure 13h) reveal the open-mesoporous morphology and the uniform distribution of C, N, and Fe elements within the nanofiber. Then the aberration-corrected HAADF-STEM images (cf. Figures 13i and 13j) were used to further visualize the dispersion of atomic Fe-Nₓ sites. Figure 13i reveals that there are no large bright dots, thus indicating no formation of crystalline Fe phases or Fe₃C clusters in the catalyst. Figure 13j shows that very small isolated bright dots (highlighted by red circles) are homogeneously distributed in the porous carbon matrix. Due to the much higher electron density of Fe atoms when compared to N and C atoms, single Fe atoms usually display as highly intense and bright dots, thus indicating the exclusive formation of uniformly doped atomic Fe-Nₓ sites.

### Example 8: X-ray photoelectron spectroscopy (XPS) observations

XPS was measured on K-Alpha™ + X-ray Photoelectron Spectrometer System (Thermo Scientific) with Hemispheric 180° dual-focus analyzer with 128-channel detector. X-ray monochromator is micro focused Al-Kα radiation. For the measurement, the powder samples were pressed and loaded on carbon taps, then pasted onto the sample holder for measurement. The data was collected with X-ray spot size of 400 µm, 20 scans for survey, and 50 scans for regions. Survey spectra were run in the binding energy range of 0-1000 eV, and high-resolution spectra of C1s, N1s, and Fe2p were collected.

To further reveal the specific Fe-Nₓ doped structures and detailed atom ratios of OM-NCNF-FeNₓ, X-ray photoelectron spectroscopy (XPS) was performed as shown in Figures 15 to 17 and Tables 1 and 2.

**Table 1: Elemental atomic qualification results of C, N, O, Fe (atom ratio %) in different carbon nanofibrous catalysts.**

| **Samples** | **C (At %)** | **N (At %)** | **O (At %)** | **Fe (At %)** |
|---|---|---|---|---|
| OM-NCNF-FeNₓ | 92.95 | 4.55 | 2.13 | 0.37 |
| OM-NCNF | 92.76 | 4.87 | 2.37 | - |
| NCNF | 91.18 | 5.91 | 2.91 | - |

**Table 2: Fitting results for N1s spectra for diverse N species in different carbon nanofibrous catalysts.**

| | **Pyridinic N (%)** | **Fe-N/Pyridinic N (%)** | **Pyrrolic N (%)** | **Graphitic N (%)** | **Quaternary N (%)** | **Oxidized N (%)** |
|---|---|---|---|---|---|---|
| **Samples** | 398.2 eV | 398.7 eV | 399.6 eV | 401.1 eV | 402.5 eV | 404.0 eV |
| OM-NCNF-FeNₓ | - | 26.18 | 3.43 | 49.26 | 8.44 | 12.68 |
| OM-NCNF | 19.93 | - | 8.81 | 48.35 | 9.30 | 13.62 |
| NCNF | 26.05 | - | 10.67 | 44.85 | 8.05 | 10.37 |

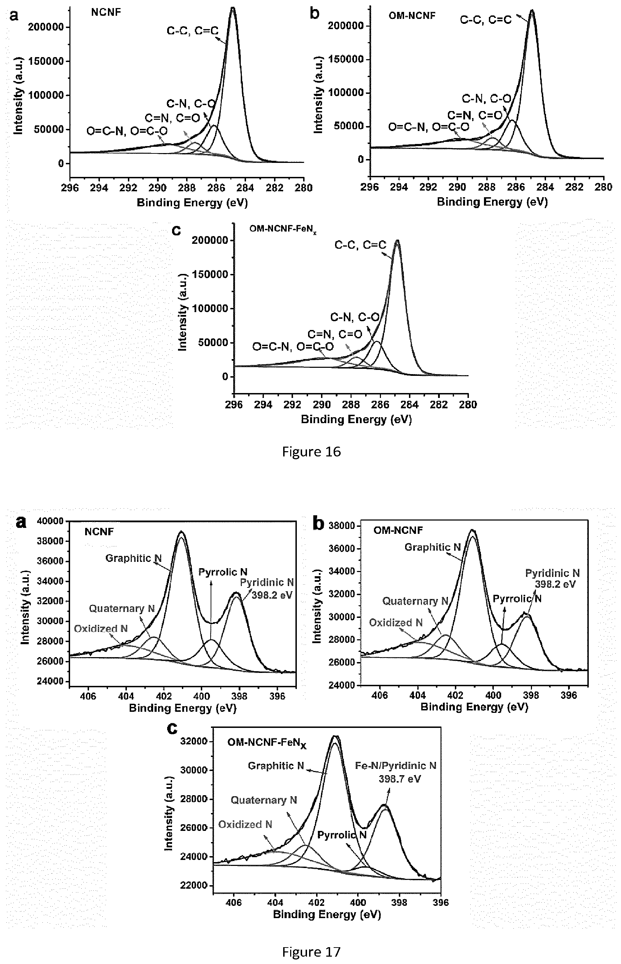

The N and Fe contents in OM-NCNF-FeNₓ are 4.55 and 0.37 atomic %, respectively (cf. Table 1). The curve-fitted high-resolution XPS Fe2p spectra in Figure 13k show that all the iron should be attributed to Fe²⁺/Fe³⁺ atomic species, no Fe⁰ and other valence states can be detected, which further confirms that there is no Fe alloy or Fe₃C cluster. The high-resolution N1s spectra show that the pyridinic N in NCNF (398.2 eV) and OM-NCNF (398.2 eV) are at the same binding energy, while this peak detected in OM-NCNF-FeNₓ shifts to 398.7 eV (cf. Figure 13l and Figure 17), which suggests that the Fe²⁺/Fe³⁺ species are bonded with pyridinic N to form the atomic Fe-Nₓ sites. It is also found that the other peak positions of N species are the same for NCNF, OM-NCNF, and OM-NCNF-FeNₓ, which indicates that the atomic Fe is majorly bonded with pyridinic N structures. Combining complementary HAADF-TEM and XPS data, it has been demonstrated that the atomic Fe-Nₓ sites are successfully and homogeneously incorporated onto the nanofibrous carbon catalysts.

### Example 9: Electrochemical measurements

All the electrochemical measurements were carried out in a conventional three-electrode cell using the Gamry reference 600 workstation (Gamry, USA) at room temperature. Ag/AgCl (saturated with KCI) was used as reference electrode and graphite rod was used as counter electrode. A glassy carbon (GC) RDE electrode with an area of 0.196 cm² was used as working electrode for evaluating the ORR activity of various catalysts. The electrochemical experiments were conducted in O₂ saturated 0.1 M KOH or DPBS electrolyte for the ORR and CV scanning, and N₂-saturated 1 M KOH or DPBS electrolyte for CV scanning. The RDE measurements were conducted by linear sweep voltammetry (LSV) at a rotating speed of 1600 rpm with a sweep rate of 10 mV/s. To estimate the double layer capacitance, the electrolyte was deaerated by bubbling with argon, and then the voltammogram was evaluated again in the deaerated electrolyte.

All potentials in this study were converted to potential vs. reversible hydrogen electrode (RHE) with a value of 0.954 according to the equation (E_{RHE} =E_{Ag/AgCl} + 0.059*pH +E^{θ}A_{g/AgCl}, by calibration). The onset potential and half-wave-potential E_{1/2} values of all catalysts were determined when the current density reached 10% and 50% of the limiting current density of each catalyst, respectively.

The nanofiber membrane sheets were first homogeneously dispersed in ethanol by probe sonication and dried in oven. Then these nanofibers-based catalyst ink solutions were prepared by adding the catalysts (10 mg) into 1 mL Nafion solution (0.25 wt % in ethanol) with vigorous stirring and sonication. 4.9 µL of catalyst ink solution was then pipetted onto the GC surface, leading to a catalyst loading of 0.25 mg/cm². Commercial 20 wt % platinum on Vulcan carbon black (Pt/C) was measured for comparison. The working electrode was prepared as follows: 10 mg Pt/C was dispersed in 1 mL Nafion solution (0.25 wt % in ethanol) by stirring and sonication for 1 h to obtain a well-dispersed ink. 4.9 µL of catalyst ink was then pipetted onto the GC surface, leading to a Pt/C loading of 0.25 mg/cm².

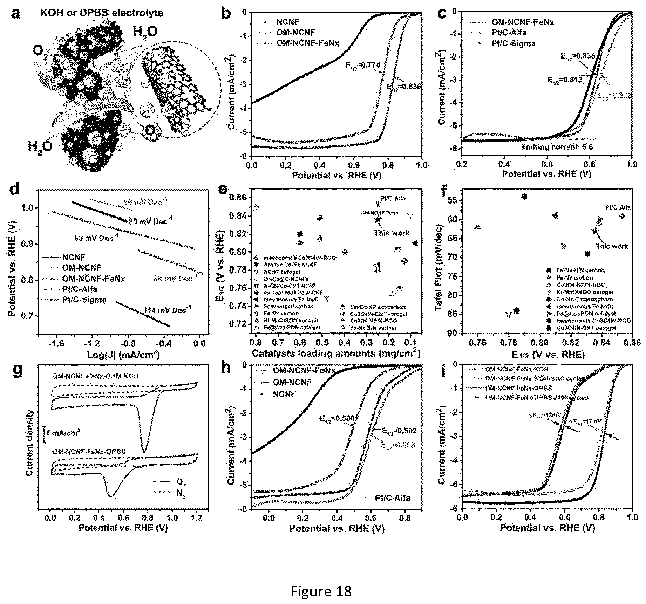

As a result of the combined benefits of open-mesoporous structure and coupled atomic Fe-Nₓ sites, these beneficial structures lead to high ORR catalytic activity by boosting the oxygen diffusion and dynamic reaction kinetics (cf. Figure 18a). The intrinsic ORR electrocatalytic properties of these CNF catalysts were first evaluated using linear sweep voltammetry (LSV) tested by rotating disk electrode (RDE) technique in 0.1 M KOH at room temperature. The commercially available Pt/C from Alfa and Sigma was tested under the same conditions for comparison. As shown in Figure 18b, for the onset potential (Eo) and half-wave potential (E_{1/2}), the introduced open-mesoporous structure for OM-NCNF (E₀= 0.850 V, E_{1/2} = 0.774 V) significantly improves the ORR activity compared to the original NCNF (E₀ = 0.680 V, E_{1/2}= 0.550 V). After doping with atomic Fe-Nₓ sites, the OM-NCNF-FeNₓ shows the best activities (Eo = 0.905 V, E_{1/2} = 0.836 V) compared with other CNF catalysts. Meanwhile, the OM-NCNF-FeNₓ also reveals the largest limiting current density (5.60 mA/cm²) compared with NCNF (3.75 mA/cm²) and OM-NCNF (5.20 mA/cm²). All these data demonstrate that the coupling of atomic Fe-Nₓ sites is crucially important for the carbon catalysts' ORR activity. When compared with the commercially used Pt/C catalysts, Figure 18c, the half-wave potentials of OM-NCNF-FeNₓ (E_{1/2} = 0.836 V) are more positive than Pt/C-Sigma catalyst (E_{1/2} = 0.812 V), while slightly less positive than Pt/C-Alfa catalyst (E_{1/2} = 0.853 V).

To clearly analyze the intrinsic kinetic activities of these ORR catalysts, the corresponding Tafel slopes are calculated from the Koutecky-Levich equation (cf. Figure 18d), the results reveal that Pt/C-Alfa has the lowest Tafel slope of 59 mV/dec, and OM-NCNF-FeNₓ shows a slightly higher Tafel slope of 63 mV/dec, while it is much lower than that of Pt/C-Sigma, NCNF, and OM-NCNF, which suggests that OM-NCNF-FeNₓ has faster kinetics. The long linear Tafel slope of OM-NCNF-FeNₓ indicates that there may be sufficient adsorbed oxygen-containing species on catalyst surface due to its unique open-mesoporous and interconnected nanofibrous structures. Furthermore, the performances of some state-of-the-art ORR catalysts were compared with catalyst of the present invention in terms of the loading amounts, E_{1/2}, and Tafel slope (cf. Figures 18e and 18f), more detailed comparison data are listed in Tables 3 and 4.

**Table 3: Summary of recently reported ORR performances of different carbon nanofiber catalysts under alkaline conditions (0.1 M KOH). For comparison, part of the performances measured from Ag/AgCl reference electrode are converted to vs. RHE, 0.954 is used as the same value applied for this study, it should be noted that the really value in different papers may be slightly different based on the electrode calibration.**

| **Catalysts** | **Catalyst loading (mg cm⁻²₎** | **Half-wave potential (V vs. RHE)** | **Half-wave potential of Pt/C (V)** | **Reference** |
|---|---|---|---|---|
| OM-NCNF-FeNₓ | 0.250 | 0.836 | - | This invention |
| Pt/C-Sigma | 0.250 | 0.812 | - | |
| Pt/C-Alfa | 0.250 | 0.853 | - | |
| Z8-Te-1000 | 0.100 | ∼0.800 | ∼0.762 | J. Am. Chem. Soc. 2014, 136, 14385-14388. |
| NCNF aerogel | 0.400 | 0.800 | 0.850 | Nano Energy, 2015, 11, 366-376. |
| Fe₃C nanoparticles encapsulated NCNF | 0.600 | ∼0.810 | ∼0.834 | Angew. Chem. 2015, 127, 8297-8301. |
| Co-NCNF | 0.498 | 0.832 | 0.876 | J. Mater. Chem. A, 2015, 3, 14284-14290. |
| HP-Co-NCNFs | 0.306 | ∼0.754 | ∼0.824 | Chem. Eur. J. 2015, 21, 2165-2172. |
| Activated Co-NCNF | 0.200 | ∼0.780 | - | Catalysis Today, 2016, 260, 82-88. |
| Activated Fe-NCNF | 0.500 | ∼0.830 | ∼0.840 | J. Phys. Chem. C 2016, 120, 7705-7714. |
| N-doped graphene/Co-CNT doped NCNF | 0.480 | 0.751 | 0.791 | Nano Res. 2016, 9, 317-328. |
| N doped carbon nanoparticle/NCNFs | 0.400 | ∼0.720 | ∼0.780 | ACS Appl. Mater. Interfaces 2016, 8, 6962-6971. |
| HP-NCNFs | 0.408 | ∼0.750 | ∼0.774 | Nano Res. 2016, 9, 2270-2283. |
| NCNF-1000 | 0.100 | 0.820 | ∼0.820 | Adv. Mater. 2016, 28, 3000-3006. |
| Co-N/CNFs | 0.600 | 0.820 | 0.838 | ACS Catal. 2017, 7, 6864-6871. |
| Zn/Co@C-NCNF | ∼0.180 | 0.754 | ∼0.820 | Carbon, 2017, 114, 250-260. |
| Co-embedded NCNF | 0.250 | ∼0.800 | ∼0.870 | ChemPhysChem, 2017, 18, 223-229. |
| Co-N@CNF700 | 0.285 | 0.814 | 0.845 | J. Power Sources, 2018, 380, 174-184. |

**Table 4: Summary of recently reported ORR performances of different types of porous carbon catalysts under alkaline conditions (0.1 M KOH). For comparison, part of the performances measured from Ag/AgCl reference electrode are converted to vs. RHE, 0.954 is used as the same value applied for this study, it should be noted that the really value in different paper may be slightly different based on the electrode calibration.**

| **Catalysts** | **Catalyst loading (mg cm⁻²)** | **Half-wave potential (V vs. RHE)** | **Half-wave potential of Pt/C (V)** | **Reference** |
|---|---|---|---|---|
| OM-NCNF-FeNₓ | 0.250 | 0.836 | - | This invention |
| Pt/C-Sigma | 0.250 | 0.812 | - | |
| Pt/C-Alfa | 0.250 | 0.853 | - | |
| N/S-doped CNT core-sheath nanostructures | 0.600 | 0.820 | 0.850 | Angew. Chem. Int. Ed., 2014, 53, 4102-4106. |
| Fe-N/C-800 | 0.100 | 0.809 | 0.818 | J. Am. Chem. Soc., 2014, 136, 11027-11033. |
| CoO/N-doped graphene | 0.714 | 0.810 | - | Energy Environ. Sci. 2014, 7, 609-616. |
| N-doped carbon nanosheets | 0.600 | 0.840 | 0.800 | Angew. Chem. Int. Ed., 2014, 126, 1596-1600. |
| N-doped carbon sheets from gelatin | 0.238 | 0.830 | - | Nano Lett., 2014, 14, 1870-1876. |
| Fe/N/graphene catalysts | 0.600 | 0.830 | 0.850 | J. Mater. Chem. A, 2015,3, 24487-24494. |
| Fe-N/C-800 | 0.079 | 0.810 | 0.800 | J. Am. Chem. Soc., 2015, 137, 5555-5562. |
| Fe/N-doped carbon | 0.800 | 0.850 | 0.840 | Nat. Commun., 2015, 6, 8618. |
| N,P-doped carbon foam | 0.150 | 0.850 | 0.850 | Nat. Nanotechnol., 2015,10,444. |
| N doped porous carbon from MgO templating | 0.250 | 0.770 | 0.800 | Adv. Mater., 2016, 28, 6845-6851. |
| Ni₃Fe-N Doped Carbon | 0.130 | 0.790 | - | Adv. Energy Mater. 2017,7,1601172. |
| Mn/Co activat-ed-carbon | 0.160 | 0.803 | 0.800 | Adv. Mater., 2016, 28, 8771-8778. |
| MnCo₂O₄/C nanosheets from NaCl salt templating | 0.127 | 0.767 | 0.801 | Nano Res., 2016, 9, 2110-2122. |
| GN-nanoribbon networks | 0.600 | 0.840 | 0.850 | Sci. Adv. 2016, 2, e1501122. |
| Co-N/C catalysts | 0.490 | 0.820 | 0.818 | ACS Appl. Mater. Interfaces 2016, 8, 32875-32886. |
| Rh/C-800 from Na₂SO₄ salt templating | 0.793 | 0.806 | 0.879 | Nanoscale, 2017, 9, 1834-1839. |
| N-doped carbon cubes from NaCl salt templating | 0.400 | 0.800 | 0.861 | Nanoscale, 2017, 9, 1059-1067. |
| Co/N/O tri-doped graphene | 0.050 | ∼0.790 | ∼0.820 | Adv. Mater. 2017, 29, 1703185. |
| RGO/Co-P/Co | 0.400 | 0.819 | 0.836 | ACS Appl. Mater. Interfaces 2017, 9, 22490-22501. |
| NFe/CNs-700-800-N₂ | 0.100 | 0.855 | 0.850 | Adv. Mater. 2017, 29, 1700707. |
| Ni/Co-NPs N-doped CNT | 0.500 | ∼0.840 | ∼0.870 | Adv. Mater. 2017, 29, 1701410. |
| Co-N-heterocyclic carbene-900 | 0.300 | ∼0.850 | ∼0.840 | ACS Appl. Mater. Interfaces 2017, 9, 38499-38506. |
| Co₃O₄/N-CNT aerogel | 0.250 | ∼0.785 | ∼0.840 | Small 2017, 13, 1700518. |
| Co₃O₄-NP/N-RGO | 0.150 | 0.760 | 0.780 | Adv. Energy Mater. 2018, 8, 1702222. |
| Fe_{0.25}-N/C-900 | 0.200 | 0.812 | ∼0.88 | Nano Energy, 2017, 36, 286-294. |
| FeBNC-800 FeNC-800 | 0.510 | 0.838 0.815 | 0.851 | ACS Energy Lett. 2018, 3, 252-260. |
| Ni-MnO/RGO aerogel | 0.250 | 0.780 | 0.840 | Adv. Mater. 2018, 30, 1704609. |
| Fe@Aza-PON catalyst | 0.102 | 0.839 | 0.826 | J. Am. Chem. Soc. 2018, 140, 1737-1742. |
| Co-ISAS/p-CN nanospheres | - | 0.838 | 0.834 | Adv. Mater. 2018, 30, 1706508. |
| CO₃O₄/N-rGO nanosheets | 0.128 | 0.790 | ∼0.785 | Adv. Mater. 2018, 30, 1703657. |

It can be observed that the synthesized OM-NCNF-FeNₓ shows high E_{1/2} (0.836 V) and low Tafel slops (63 mV/dec) at relatively low catalyst loading amounts (0.25 mg/cm²). As shown in Table 3, the catalyst of the present invention shows much better ORR performance compared to these earlier reported CNF based catalysts (E_{1/2} values ranged from ∼0.720 to ∼0.820 V). Meanwhile, when comparing with the other types of carbon based ORR catalysts with similar loading amounts in recent reports (E_{1/2} values ranged from ∼0.760 to ∼0.850 V, Table S4), the catalyst of the present invention still presents comparable or better ORR performance. Thus, it can be concluded that catalyst of the present invention can achieve a catalytic performance among the best.

Here, it is needed to emphasize again that the air cathode's performance in Mg-air batteries is not only affected by intrinsic ORR activity; the design of highly efficient air cathode in Mg-air batteries also requires an integrated structural-advantages with open-mesoporous and interconnected structures in catalyst for improving mass transport properties and the 3D porous channels and networks in cathode for boosting air diffusion. Based on these analyses, it can be concluded that the novel design in fabricating the atomic Fe-Nₓ coupled open-mesoporous NCNF of the present invention as oxygen electrode shows obvious advantages and unique properties in comparison to recently reported non-noble metal-N/C catalysts and also many other previous reported ORR electrocatalysts; the high surface area, open-mesoporous and interconnected structures, as well as successful atomic and homogeneous Fe-Nₓ doping are therefore attributable to its high ORR activities, which guarantees the excellent discharge performance in Mg-air batteries.

Since an Mg-air battery device will be equipped with neutral electrolytes, it is highly important to evaluate the ORR performance of OM-NCNF-FeNₓ in neutral electrolyte. Accordingly, the CV and LSV measurements in DPBS media were further performed. As shown in Figure 18g, the cathodic peak for ORR in DPBS of OM-NCNF-FeNₓ in O₂-saturated solution shifts to more negative potential compared with the peak in 0.1 M KOH, which indicates the intrinsic catalytic activity in DPBS electrolytes will be less efficient compared to 0.1 M KOH. This ORR activity difference should be attributed to the higher electrolyte concentration and ions conductivity of 0.1 M KOH. When compared with other CNF catalysts in DPBS electrolyte, the OM-NCNF-FeNₓ (E_{1/2}=0.592 V) exhibits obviously higher catalytic activity, which is only 17 mV negative than that of Pt/C-Alfa (E_{1/2}=0.609 V) for E_{1/2} values (cf. Figure 18h). Meanwhile, OM-NCNF-FeNₓ has a large limiting current density (5.40 mA/cm²), which is comparable to Pt/C-Alfa (5.68 mA/cm²). For the ORR catalytic stabilities of OM-NCNF-FeNₓ, as shown in Figure 18i, the E_{1/2} values of ORR in 0.1 M KOH and DPBS after 2000 cycles only show a potential difference of 17 and 12 mV, respectively.

### Example 10: Liquid and solid Mg-air battery assembly and tests

### Introduction:

Liquid Mg-air batteries were assembled and tested in homemade electrochemical cells with total volume of 24 mL, where catalysts loaded onto a carbon cloth with polytetrafluoroethylene (PTFE) gas diffusion layer (catalysts loading 1 mg/cm² for nanofiber catalysts and Pt/C-Alfa) as the air cathode and polished Mg foil as the anode in DPBS electrolyte. Discharge measurements were carried out on the constructed cell at room temperature with a charge-discharge device from Wuhan Land.

Preparation of LiCI/PVA gel electrolyte for solid Mg-air battery: A 6 g sample of polyvinyl alcohol (PVA) powder was dissolved in 40 mL of distilled water at 95 °C with stirring. After the PVA powder was completely dissolved, 8.5 g of LiCI was added into the PVA solution under vigorous stirring until it formed a homogeneous sticky solution. The solution was cooled at room temperature, and the solution became a clear and transparent gel.

For the solid-state Mg-air battery assembly, a polished Mg thin foil was used as anode, then the LiCl/PVA gel electrolyte was cast onto the surface, the catalyst-loaded carbon cloth (bare carbon cloth with catalysts loading 1 mg/cm² for OM-NCNF-FeNₓ and Pt/C-Alfa) was placed on the Mg foil with gel electrolyte, followed by pressed Ni foam as current collector next to carbon cloth. Finally, a parafilm was used to package this micro-device tightly. Similarly, five serially connected solid-state Mg-air micro-batteries could also be assembled by this protocol.

All the Mg-air batteries were tested under ambient atmosphere. The polarization curve measurements were performed by LSV (5 mV/s) at room temperature with Gamry reference 600 workstation (Gamry, USA). Both the current density and power density were normalized to the effective surface area of air cathode. Discharge measurements were carried out on the as-constructed liquid or solid devices at room temperature with a charge-discharge device from Wuhan Land. The specific capacity was calculated and normalized to the weight of total Mg foil. The red light-emitting diodes (LED, 3.5 V) was commercially available.

### Results:

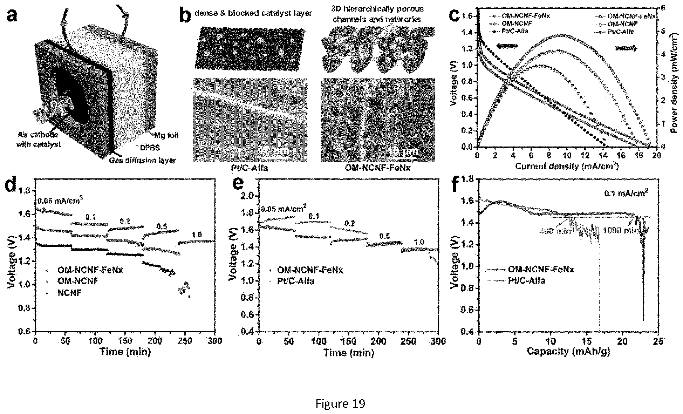

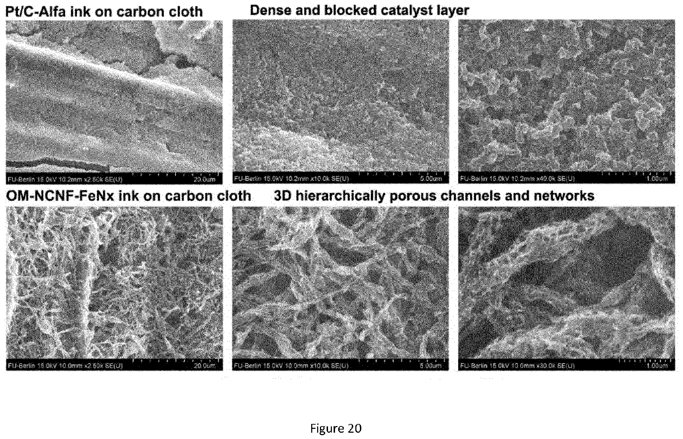

To evaluate the application potential of OM-NCNF-FeNₓ as an air cathode in Mg-air batteries, a primary liquid Mg-air battery was first assembled, in which a polished Mg foil was used as the anode and the OM-NCNF-FeNₓ catalyst-loaded carbon cloth as the air cathode, and DPBS media was used as electrolyte (cf. Figure 19a). Figure 19b and Figure 20 give the SEM images of the OM-NCNF-FeNₓ and Pt/C-Alfa inks loaded carbon cloth. For the OM-NCNF-FeNₓ, the catalyst layer on the air cathode exhibits with 3D nanofibrous geometry and hierarchically interconnected porous channels and networks, which will benefit the fast air diffusion in the cathode and thus boost the Mg-air battery performances; while, for the Pt/C-Alfa, a dense and blocked catalyst layer is observed, which may limit the air diffusion efficiency. Figure 19c shows the polarization and power density curves for the liquid Mg-air batteries with different catalysts. The open-circuit-potential of the Mg-air battery equipped with OM-NCNF-FeNx is ∼1.77 V. The current and maximum power densities of OM-NCNF-FeNₓ-equipped Mg-air battery are as high as 19.2 mA/cm² and 5 mW/cm², respectively, exceeding those values of the Pt/C-Alfa counterpart. The galvanostatic discharge voltage plateaus decrease when the current densities increase for all catalysts (cf. Figure 19d). At the discharge current densities of 0.05 and 1 mA/cm², the battery with OM-NCNF-FeNₓ air cathode shows voltage plateaus of 1.61 and 1.40 V, respectively, which are much higher and more stable than the other CNF catalysts-equipped batteries. When compared to Pt/C-Alfa, the OM-NCNF-FeNₓ-based air cathode shows lower voltage at the discharge current densities from 0.05 to 0.2 mA/cm², while it starts to exceed the performances of Pt/C-Alfa at the discharge current densities of 0.5 and 1 mA/cm² (cf. Figure 19e). When comparing the battery capacities (cf. Figure 19f), the OM-NCNF-FeNₓ-equipped battery (∼23 mAh/g) has a much higher capacity than Pt/C-Alfa (∼17 mAh/g). Furthermore, there is no obvious voltage drop for OM-NCNF-FeNₓ after discharge for about 16.7 h, indicating a good durability when serving as an air cathode. It has also been noted that all the parallel experiments show similar discharge voltage and capacity with slightly difference, which also demonstrate its high stability for air cathode. For comparison, the significant breakthroughs of primary Mg-air batteries in recent years in terms of the loading amounts, battery types, electrolytes, and discharge current densities have been summarized in Table 5.

**Table 5: The discharge performances of Mg-air batteries powered by different electrocatalysts based cathode and Mg foil based anode that have been designed in this study and some other recent literatures.**

| **Catalysts for designing air cathode** | **Battery types** | **Loading amount (mg.cm⁻² )** | **Electrolyte** | **Potentials at different discharge current densities (V@mA.cm⁻² )** | **Remarks** | **Reference** |
|---|---|---|---|---|---|---|
| OM-NCNF-FeNₓ | liquid | 1 mg/cm² | DPBS | ∼1.52@0.1 | The assembled Mg-air batteries with neutral electrolytes reveal high open-circuit voltage, stable discharge voltage plateaus, and high capacity. | This invention |
| | | | | ∼1.49@0.5 | | |
| | | | | ∼1.40@1.0 | | |
| Pt/carbon | liquid | 1 mg/cm² | DPBS | ∼1.70@0.1 | Poor durability and stability, especially at high current density, low discharge capacity | |
| | | | | ∼1.48@0.5 | | |
| | | | | ∼1.41@1.0 | | |
| OM-NCNF-FeNₓ | solid | 1 mg/cm² | DPBS | ∼1.55@0.1 | The flexible Mg-air micro-battery show long operating life and can work stably for more than 105 h with a voltage higher than 1.27 V. | |
| | | | | ∼1.41@0.5 | | |
| | | | | ∼1.36@1.0 | | |
| MoO₃ nanoparticles | solid | - | Hydrogel electrolyte | ∼1.54@0.1 | Fully biodegradable Mg-MoO₃ battery and is capable of driving typical ultralow-power implantable electronics with robust functions. | Small, 2018, 1800994, doi.org/10.1002/ smll.201800994. |
| | | | | ∼1.08@0.3 | | |
| | | | | ∼0.40@0.5 | | |
| Crystallized silk film with 100 nm gold and 10 nm Ti coating | solid | 1 × 0.5 cm² | Polymer electrolyte | ∼0.95@0.1 | Biodegradable polymer electrolyte (silk fibroin-choline nitrate) has been developed and programmed battery lifetime can be achieved using silk protection layers | ACS Energy Lett., 2017, 2, 831. |
| | | | | ∼0.80@0.2 | | |
| PPy/PEDOT hydrogel | liquid | 1 × 1 cm² | PBS | ∼1.10@0.1 | The Mg battery with a PPy/PEDOT cathode can provide a stable voltage of 0.7 V for long-term usage. | Adv. Mater., 2016, 28, 9349. |
| | | | | ∼0.50@0.5 | | |
| Amorphous MnO₂/CNTs-OH catalyst | liquid | 16 cm² | 15 wt% NaCl solution | ∼1.03@50.0 | The assembled Mg-air battery shows high peak power density and the cell can operate steadily for more than 15 h. | Catalysis Today, 2017, 298, 241. |
| Mixed-phase mullite (SmMn₂O₅) electrocatalyst | coin cell | ∼0.1 mg/ cm² | 1 M NaCl electrolyte | ∼1.20@1.0 | The device can work efficiently in neutral electrolyte and discharge 300 min at 1 mA cm⁻² in 1 m NaCl electrolyte. | Nano Energy 2016, 27, 8. |
| Silk fibroin-polypyrrole film | liquid | 1 × 1 cm² | PBS | ∼1.35@0.02 | Biodegradable Mg-air battery structures were achieved by using the polypyrrole fabricated on a silk film as cathode | Adv. Funct. Mater. 2016, 26,145 4. |
| | | | | ∼1.04@0.05 | | |
| | | | | ∼0.46@0.1 | | |
| Ultrafine Mn₃O₄ nanowires/3D graphene/single walled carbon nanotube composites | coin cell | - | Mg(NO₃)₂ (2.6 M)-NaNO₂ (3.6 M) with 1 wt % ionic liquid additive | ∼1.34@0.2 | The fabricated Mg/air batteries demonstrate a cell open circuit voltage (1.49 V), a plateau voltage (1.34 V), and a long discharge time. | ACS Appl. Mater. Interfaces 2016, 8, 2771 0. |
| Water soluble graphene | liquid | 60 mg/cm² | 3.5% NaCl electrolyte | ∼0.65@1.5 | Improving the Mg-air battery life in hours up to 30.95%, max. 16 h. | J. Power Sources 2015, 276, 32. |
| Polypyrrole-para(toluene sulfonic acid) cathode | liquid | 11 × 10 × 0.04 mm³ | a. Polymer electrolyte | a. | The assembled battery delivers a maximum volumetric power density of 3.9 W L⁻¹, which is suffi cient to drive small biomedical devices | ACS Appl. Mater. Interfaces 2014,6,21110. |
| | | | | ∼1.19@0.1 | | |
| | | | b. PBS | b. | | |
| | | | | ∼1.05@0.1 | | |
| Mo foil | liquid | 1 cm × 2 cm | PBS | ∼0.52@0.1 | The simple and scalable batteries that provide biocompatible and environmentally benign sources of power have been developed. | Adv. Mater. 2014, 26, 3879. |
| | | | | ∼0.38@0.2 | | |

It can be observed that the OM-NCNF-FeNₓ cathode equipped Mg-air battery reveals much higher working voltage at the same current density (1.40 V at current density of 1 mA/cm²) than these recent reports (most of them can't work properly at such a high current density). Notably, comparing to the previous reported Mg-air batteries via using PBS as electrolytes, our Mg-air battery shows obviously better and more stable battery performance, especially at large discharge current densities (0.5-1.0 mA.cm⁻²).

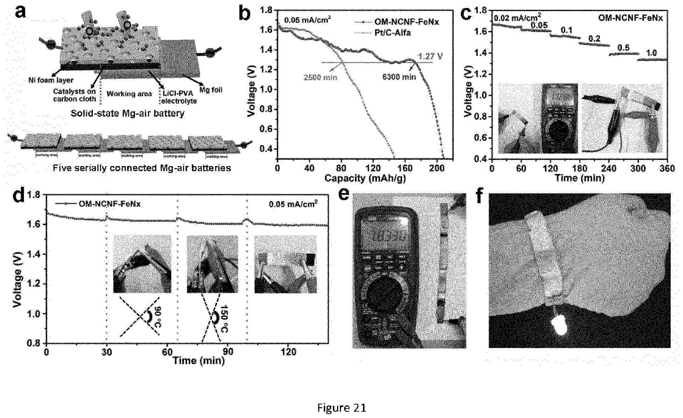

Besides the liquid Mg-air battery, a solid-state Mg-air micro-battery was constructed and serially connected the solid-state Mg-air micro-battery to demonstrate the potential applications of the OM-NCNF-FeNₓ air cathode in flexible/wearable micro-sized electronics and biomedical devices as depicted in Figure 21a. In a simplified model system, a flexible solid-state Mg-air battery was developed, composed of a OM-NCNF-FeNₓ-loaded carbon cloth as air cathode, polished Mg foil as anode, poly (vinyl alcohol)-LiCI as neutral gel electrolyte, and thin nickel foam as current collector. As shown in Figure 21b, the OM-NCNF-FeNₓ-equipped solid-state battery can work stably for more than 105 h with a voltage higher than 1.27 V, which is much longer than the Pt/C-Alfa-equipped solid-state battery (∼ 42 h). When compared with Pt/C-Alfa on the discharge capacity (146 mAh/g), the OM-NCNF-FeNₓ air cathode equipped solid-state battery also exhibited a significantly improved capacity (209 mAh/g). It should be noted that the discharge capacity and operating time of the solid-state Mg-air battery were all longer than the liquid Mg-air battery. A probable reason for this might be less side reactions between the Mg foil and PVA-LiCl gel electrolyte, because the pure Mg foil was generally very active and easy to react with aqueous electrolytes.

Furthermore, the OM-NCNF-FeNₓ air cathode equipped solid-state battery exhibits very stable discharge performances at different current densities (cf. Figure 21c), which is similar to the discharge performance of the liquid Mg-air battery discussed above; the open-circuit-potential (1.73 V) is also similar to a liquid battery (1.77 V). The flexibility of this battery is also tested by bending the device to a large angle (90° or 150°) or folded back to front, no obviously voltage changes are observed (Figure 21d). Furthermore, this single solid-state Mg-air battery can also be coupled in series. Figure 21e shows the open-circuit-potential (7.83 V) of the five serially connected solid-state Mg-air micro-batteries. These micro-batteries have been shaped into a wristband-like morphology and used to power a large red LED (3.5 V) without obvious performance decay for a few hours (cf. Figure 21f), which indicates the OM-NCNF-FeNₓ-equipped micro-battery can serve as flexible and wearable power sources for applications in diverse electronic and biomedical devices, because the powers to drive these devices generally fall in the µW to mW levels, like wristbands for health monitoring, pacemakers, cardiac defibrillators and neurological stimulators, and electrical stimulators for stem cell differentiation.

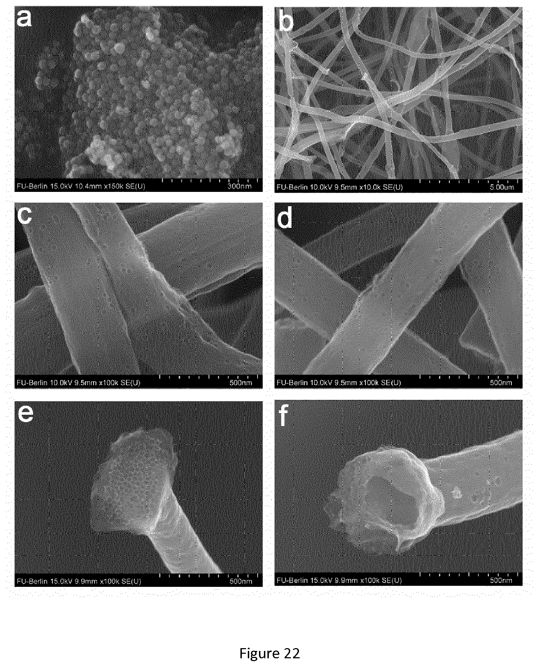

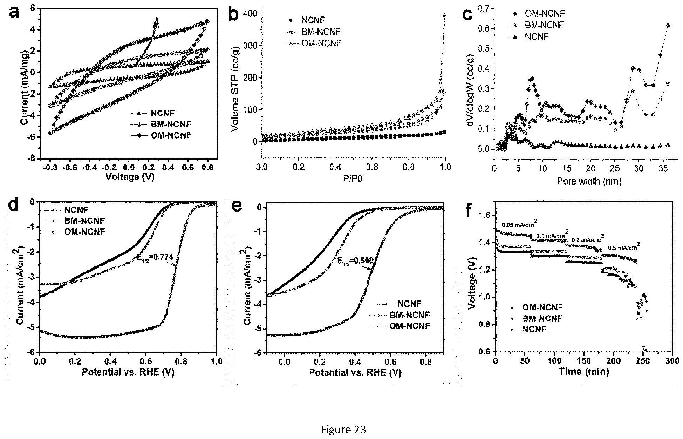

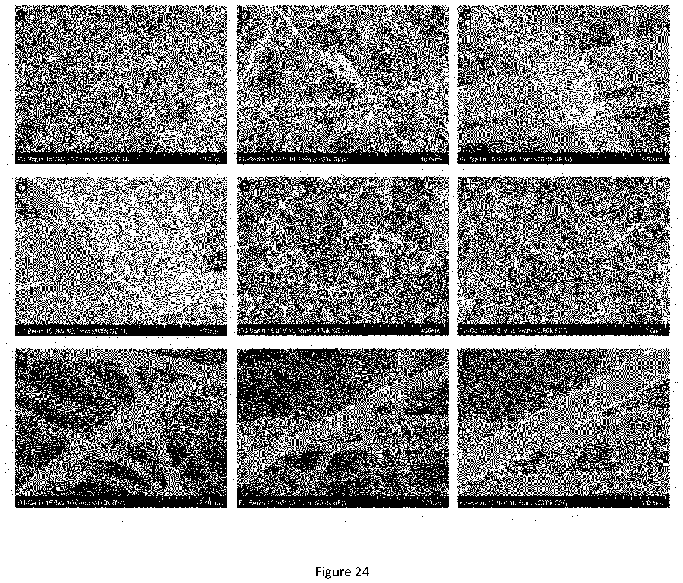

All the above results highlight again that the OM-NCNF-FeNₓ-based air cathode offers an integrated advantages of high ORR catalytic activity and hierarchically porous structures, and therefore it can durably work as an advanced air cathode for both liquid and solid Mg-air batteries. Due to its irregular network morphology and hierarchical structure of these branched silica nanoclusters, only these unique templates could generate OM-NCNF with open-mesoporous and interconnected structures. Additionally, to further confirm this assumption, monodispersed silica nanoparticles (22 nm) were also used to perform electrospinning fabrication under the same condition as that of OM-NCNF. As shown in Figures 22 and 23, it can be clearly observed that the fabricated CNFs all exhibit blocked mesoporous structures, there are dense carbon skin layers on the nanofibers and nearly no open mesopores can be detected, which will suppress their ORR catalytic activities and Mg-air battery performances. Meanwhile, upon further increasing the silica concentration by 4 times or increasing the particle sizes from 22 nm to 50 nm, there is still no open-mesoporous or interconnected structures can be observed from these CNFs (cf. Figure 24).

In summary, a new and unique approach to overcome the challenges to the sluggish reaction kinetics of air cathodes faced in Mg-air batteries via fabricating open-mesoporous CNFs with homogeneously coupled atomic metal-Nₓ sites has been provided in the present invention. The excellent electrocatalytic and battery performances of this novel oxygen electrode could be attributed to several factors: (1) the homogeneously coupled atomic metal-Nₓ sites guaranteed its good ORR activity and stability; (2) the open-mesoporous and interconnected structures and high specific surface area made the active metal-Nₓ sites fully accessible and also improved the mass transport properties; (3) the 3D hierarchically porous channels and networks in cathode significantly increased the air diffusion pathways. Notably, the OM-NCNF-metal-Nₓ-equipped Mg-air batteries can work efficiently in neutral electrolytes with high open-circuit voltage, stable discharge voltage plateaus, high capacity, long operating life, and good flexibility, which is superior to the state-of-the-art Pt/C equipped batteries. Therefore, the novel and advanced oxygen electrode of the present invention can meet the challenges and urgent needs for efficient air cathodes in Mg-air batteries with neutral electrolytes. Overall, the present invention not only creates many opportunities in the future design of metal-air batteries to achieve flexible, wearable, and bio-adaptable power sources for diverse electronic and biomedical devices, but also opens new pathways to the scale-up production of advanced nanofibrous carbon electrodes for a broad range of applications wherein fast ion/electron storage/transportation, metal-atom doping, as well as cytocompatible electronic-cellular-interfaces are highly required, such as for Li-ion batteries, supercapacitors, electronics, biosensors, and even tissue monitoring and regenerations.

The Figures show:

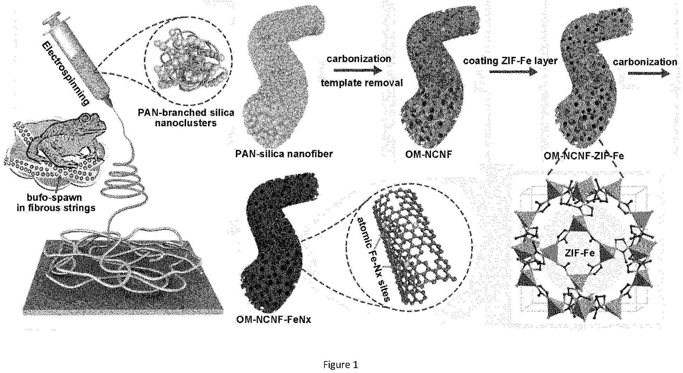

Figure 1 shows schematic representations of the fibrous string structures of bufo-spawn inspired fabrication towards the open-mesoporous carbon nanofibers of the present invention. The chemical structures of *in-situ* coated ZIF-Fe thin layer and the generated atomic Fe-Nₓ sites on OM-NCNF-FeNₓ nanofibers are also illustrated.

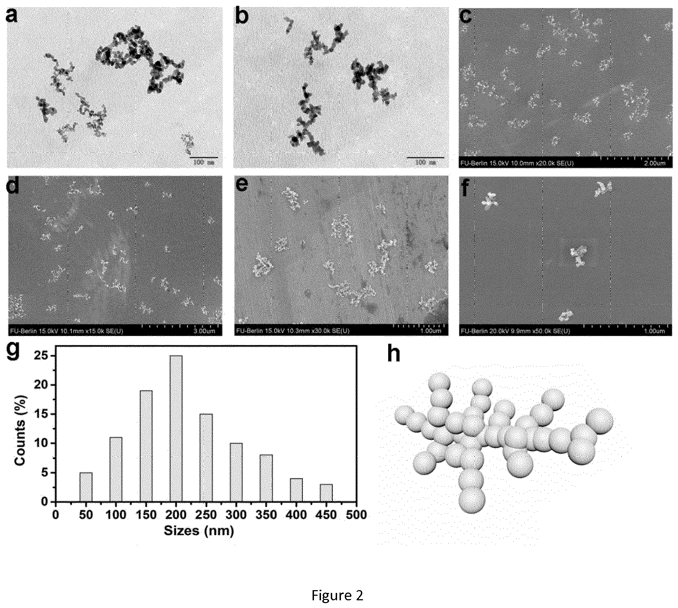

Figure 2 shows (a,b) TEM images and (c-f) SEM images of silica nanocluster and (g) corresponding size distribution of the branched silica nanoclusters; (h) shows the illustrated image for the branched silica nanoclusters.
Figure 3 shows SEM and TEM images of pure PAN nanofibers after carbonization at 1000 °C.
Figure 4 shows (a) SEM image and photograph (insert image) of the fabricated PAN-silica nanocluster-based composite nanofibers by electrospinning; (b) SEM image and photograph (insert image) of the fabricated OM-NCNF after carbonization and etching of silica; (c) high-resolution SEM image of single OM-NCNF nanofibers with clear and obviously open mesopores; (d) high-resolution SEM image of the fabricated OM-NCNF-FeNₓ after *in-situ* coating and carbonization of ZIF-Fe layer. (e and f) CV curves and specific capacitances of these nanofiber electrodes at a scanning rate of 50 mV/s in DPBS buffer, cell culture grade, pH 7.2-7.4, values in f are expressed as means ± SD, n=4; (g) 3D hMSC image on the OM-NCNF-FeNₓ nanofiber by live/dead viability staining; (h) live-dead cell ratios of hMSC after being seeded on the nanofibers or TCPS for 7 days, the live cell number on OM-NCNF shows the highest value and is normalized to 100% for the sake of comparison; (i) live cell numbers of hMSC on the nanofibers or TCPS after cultured for 1, 3, 5, and 7 days. The initial cell culture densities are the same for all samples, values are expressed as means ± SD, n=15, *P < 0.01 versus bare TCPS.
Figure 5 shows SEM images of the fabricated PAN-branched silica nanoclusters based composite nanofibers by electrospinning; it can be clearly seen that there are abundant interconnected branched silica nanoclusters both on the surface and in the nanofibrous matrix.

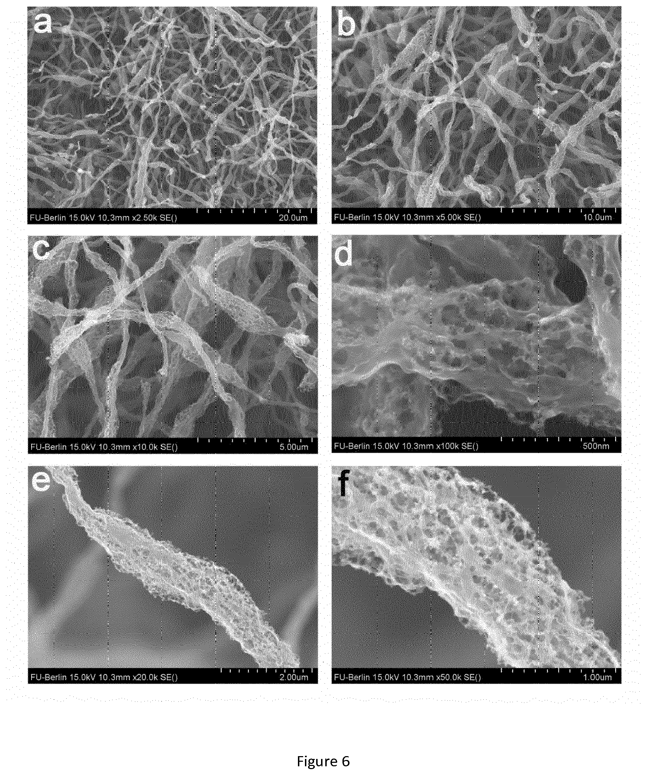

Figure 6 shows SEM images of the fabricated OM-NCNF via carbonization of PAN-branched silica nanoclusters based nanofibers at 1000 °C for 2 h and followed by 2 M NaOH etching for 24 h at 60°C for two times.

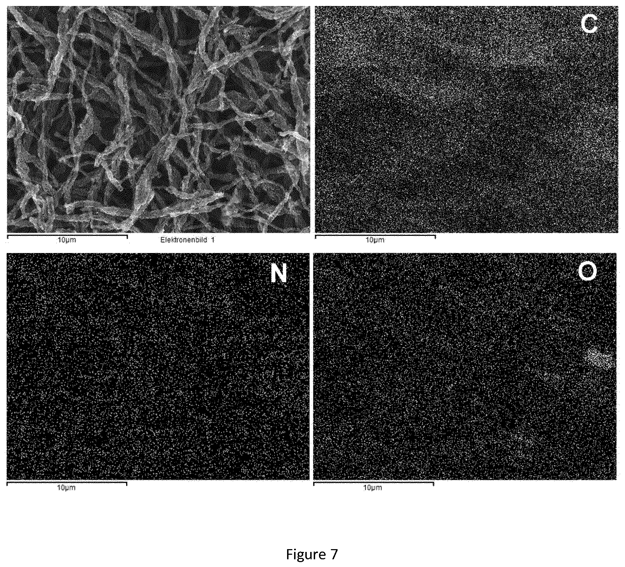

Figure 7 shows SEM mapping images of the fabricated OM-NCNF via carbonization at 1000 °C and NaOH etching of silica templates
Figure 8 shows FTIR spectra of the starting reagent of 2-methylimidazole and the Fe-doped zeolitic imidazolate frameworks (ZIF-Fe) thin layer coated OM-NCNF (OM-NCNF-ZIF-Fe).
Figure 9 shows SEM images of the fabricated OM-NCNF-FeNₓ via in-situ coating of ZIF-Fe layer and followed by 1100 °C carbonization for 1 h. It can be noted that there is no isolated ZIF-Fe nanocrystal on these nanofibers, thus indicating the homogeneous coating and coupling of ZIF-Fe framework layer on OM-NCNF nanofibers.
Figure 10 shows CV curves of OM-NCNF-FeNₓ nanofibers at different scanning rates in DPBS buffer, cell culture grade, pH 7.2-7.4.

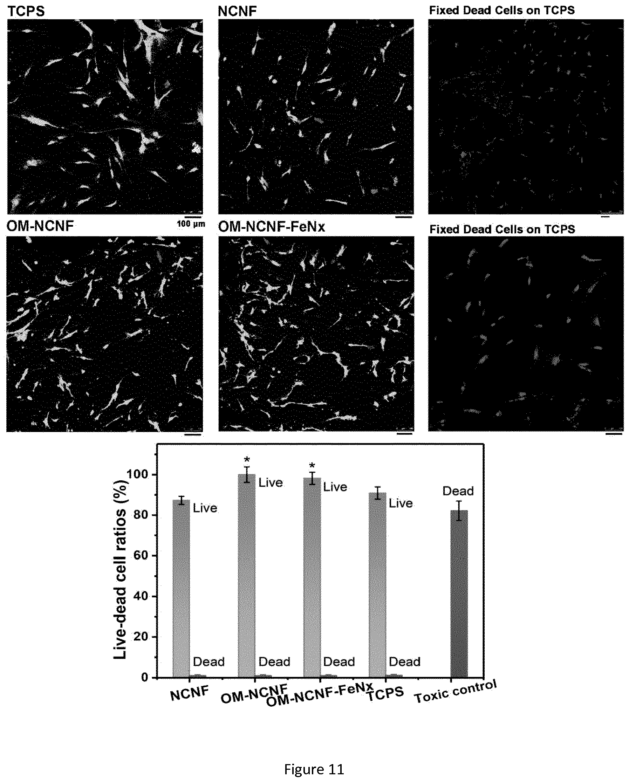

Figure 11 shows live-dead cell staining of hMSC after being seeded on the nanofibers or TCPS for 7 days; only a few of dead hMSC cells are found indicating the excellent cytocompatibility. To establish a toxic control, 4% paraformaldehyde was added into the culture media to kill and fix the dead cells (right images), it can be found that there is no live cell.

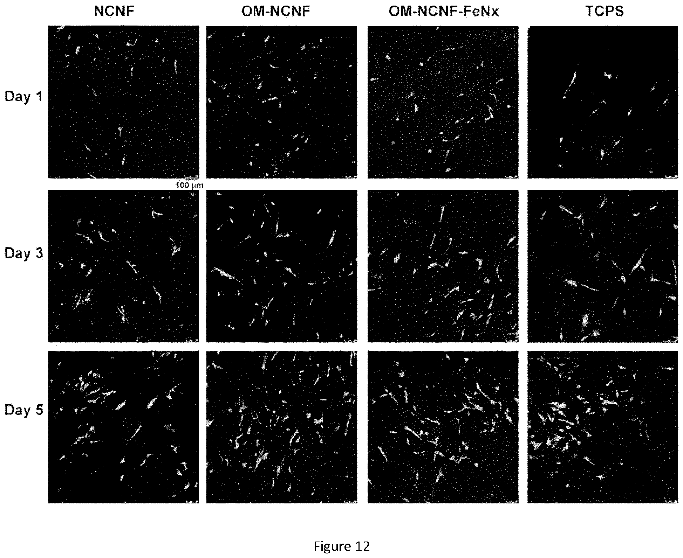

Figure 12 shows live-dead cell staining of hMSC after being seeded on the nanofibers or TCPS at day 1, 3, and 5, only a few of dead hMSC cells are found indicating the excellent cytocompatibility.
Figure 13 shows (a, b, and c) TEM and (d) HRTEM images of the OM-NCNF-FeNₓ nanofiber; (e) N₂ adsorption/desorption isotherms for calculating mesoporous surface areas; (f) pore size distribution curves of each sample calculated from the adsorption branch of the isotherms by the QSDFT model; (g) HAADF-STEM images and (h) the corresponding element mapping of C, N, and Fe of OM-NCNF-FeNₓ; (i and j) aberration-corrected HAADF-STEM images of OM-NCNF-FeNₓ nanofiber; (k) curve-fitted high-resolution XPS Fe2p spectra; (I) comparison of curve-fitted high-resolution XPS N1s spectra of OM-NCNF and OM-NCNF-FeNₓ.
Figure 14 shows Raman spectra for the fabricated NCNF, OM-NCNF, and OM-NCNF-FeNx.
Figure 15 shows (a) FTIR spectra of the fabricated carbon nanofibers, all the characteristic peaks of porous carbon have emerged, the -C=C and -C=N peaks correspond to the sp² carbon skeletons, while the -C-O and -C-N indicate the defects in the carbon matrix, which are believed to be highly useful in boosting the ORR performances for porous carbon catalysts; XPS survey scanning of (b) NCNF, (c) OM-NCNF, and (d) OM-NCNF-FeNₓ.
Figure 16 shows high-resolution XPS C1s analysis of (a) NCNF, (b) OM-NCNF, and (c) OM-NCNF-FeNₓ.
Figure 17 shows high-resolution XPS N1s analysis of (a) NCNF, (b) OM-NCNF, and (c) OM-NCNF-FeNₓ.
Figure 18 shows (a) schematic illustration of ORR in KOH and DPBS electrolytes for OM-NCNF-FeNₓ nanofiber catalysts; (b) ORR polarization curves for nanofibers catalysts in 0.1 M KOH; (c) ORR polarization curves of OM-NCNF-FeNₓ and Pt/C catalysts in 0.1 M KOH; (d) corresponding Tafel plots adapted and calculated from ORR curves of each catalyst; (e) comparison of E_{1/2} values versus catalyst loading amounts between the catalysts of the present invention with some recently reported ORR catalysts; (f) comparison of Tafel slopes vs E_{1/2} values between the catalysts of the present invention with some recently reported ORR catalysts; (g) CV curves of OM-NCNF-FeNₓ in O₂-saturated (solid line) and N₂-saturated (dotted line) in 0.1 M KOH and DPBS at 1600 rpm; (h) ORR polarization curves of nanofiber and Pt/C-Alfa catalysts in DPBS at 1600 rpm; (i) ORR polarization curves of OM-NCNF-FeNₓ before and after 2000 cycles in 0.1 M KOH and DPBS. All catalysts loading amounts were 0.25 mg/cm².
Figure 19 shows (a) schematic illustration of the liquid Mg-air battery; (b) SEM images and schematic pictures of Pt/C ink (left) and OM-NCNF-FeNₓ ink (right) on the carbon cloths; (c) discharge and power density curves of the primary liquid Mg-air batteries with different CNF and Pt/C-Alfa catalysts in DPBS; (d) galvanostatic discharge curves of the liquid Mg-air batteries with different CNF catalysts at different current densities in DPBS, 60 min duration for each stage; discharge curves (e) and discharge capacity (f) of the liquid Mg-air batteries with OM-NCNF-FeNₓ and Pt/C-Alfa cathodes at a current density of 0.1 mA/cm² in DPBS.
Figure 20 shows (top) SEM images of the Pt/C-Alfa ink on carbon cloth, a dense and blocked catalyst layer is observed, which will not benefit the oxygen diffusion in the air cathode; (bottom) SEM images of the OM-NCNF-FeNₓ ink on the carbon cloth, 3D hierarchically porous channels and networks based catalyst layer is observed, which will benefit the fast oxygen diffusion in the air cathode, thus boosting the Mg-air battery performances.
Figure 21 shows (a) schematic illustration images of the solid-state Mg-air micro-battery and five serially connected solid-state Mg-air micro-batteries; (b) discharge capacity curves of the solid-state Mg-air micro-batteries with OM-NCNF-FeNₓ and Pt/C-Alfa cathodes at a current density of 0.05 mA/cm² (parallel experiments give similar discharge voltage and capacity); (c) discharge curves of the solid-state Mg-air micro-battery with OM-NCNF-FeNₓ cathode at different current densities, 60 min duration for each stage; (d) discharge curves at 0.05 mA/cm² for the solid-state Mg-air micro-battery with OM-NCNF-FeNₓ, applying bending strain every 30-40 min; (e) open-circuit-potential of the five serially connected solid-state Mg-air micro-batteries with OM-NCNF-FeNₓ (7.83 V); (f) photograph of a red LED (≈3.5 V) powered by the wristband-like solid-state Mg-air micro-battery devices with OM-NCNF-FeNₓ.
Figure 22 shows (a) SEM image of the isolated and monodispersed silica nanoparticles (Sigma, Ludox-AS40) with uniform diameter of 22 nm after freeze-drying. (b-f) SEM images of the fabricated BM-NCNF via carbonization of PAN-silica nanoparticles (1 g : 0.8 g) based nanofibers at 1000 °C for 2 h and followed by 2 M NaOH etching for 24 h at 60°C for two times. It could be clearly observed that there is no formation of interconnected and open-mesoporous structures on the BM-NCNF carbon nanofibers, there is a dense carbon skin layer on the carbon nanofibers, thus only blocked mesoporous structures can be noticed, which will inhibit the fast mass/ions/oxygen transfer within these catalytic sites.
Figure 23 shows (a) CV curves of NCNF, BM-NCNF, and OM-NCNF nanofibers at a scanning rate of 50 mV/s in DPBS buffer; (b) N₂ adsorption/desorption isotherms and (c) pore size distribution curves, calculated from the adsorption branch of the isotherms by the QSDFT model; (d) RDE polarization curves of the as prepared NCNF, BM-NCNF, and OM-NCNF nanofiber catalysts to compare the ORR catalytic activities in 0.1 M KOH; (e) RDE polarization curves of the as prepared NCNF, BM-NCNF, and OM-NCNF nanofiber catalysts to compare the ORR catalytic activities in DPBS buffer, cell culture grade, pH 7.2-7.4; (f) discharge curves of the assembled liquid Mg-air battery to compare the catalytic activities of different cathodes in DPBS electrolytes at different discharge current densities (60 min duration for each stage).
Figure 24 shows (a-d) SEM images of the fabricated BM-NCNF with high silica concentration (Sigma, Ludox-AS40, 22 nm) via carbonization of PAN-silica nanoparticles (1 g : 3.2 g) based nanofibers at 1000 °C for 2 h and followed by 2 M NaOH etching for 24 h at 60°C for two times; (e) SEM image of the isolated silica nanoparticles (Alfa, no. 043093, 20-65 nm) with average diameter of 50 nm after freeze-drying; (f-i) SEM images of the fabricated BM-NCNF with larger silica nanoparticle sizes (Alfa, no. 043093, 20-65 nm) via carbonization of PAN-silica nanoparticles (1g : 0.8g) based nanofibers at 1000 °C for 2 h and followed by 2 M NaOH etching for 24 h at 60°C for two times. It can be clearly observed that there is still no formation of open-mesoporous and interconnected structures on these BM-NCNF carbon nanofibers.

## Claims

1. A method for producing atomic M- and N-doped open-mesoporous carbon nanofibers, comprising the steps of:
(a) providing a polymer and silica nanocluster solution comprising a polymer, silica nanoclusters and a solvent;
(b) electrospinning the polymer and silica nanocluster solution to obtain a polymer-silica nanocluster textile membrane;
(c) carbonization treating the polymer-silica nanocluster textile membrane;
(d) etching the treated polymer-silica nanocluster textile membrane to remove at least a part of the silica nanoclusters to obtain open-mesoporous carbon nanofibers;
(e) absorbing a metal coordinating compound onto the open-mesoporous carbon nanofibers;
(f) adding Zn ions and M ions to form a coating of M-doped coordination framework onto the open-mesoporous carbon nanofibers; and
(g) carbonization treating the coated open-mesoporous carbon nanofibers to obtain atomic M- and N-doped open-mesoporous carbon nanofibers,
wherein M is a metal selected from the group consisting of Fe, Co, Ni, Cu, Mn, Mo, W, Ru, Pd, Ir and Pt; and
wherein the polymer is selected from the group consisting of polyacrylonitrile, polyimide, polyvinyl alcohol and lignin.

2. The method according to claim 1, wherein the polymer is polyacrylonitrile.

3. The method according to claim 1 or 2, wherein M is Fe.

4. The method according to any one of claims 1 to 3, wherein the metal coordinating compound is selected from the group consisting of imidazoles and derivatives thereof, terephthalic acid and derivatives thereof, 1,3,5-benzenetricarboxylic acids and derivatives thereof, dopamine hydrochloride and derivatives thereof, p-phenylendiamine and derivatives thereof and dithiooxamide and derivatives thereof.

5. The method according to any one of claims 1 to 4, wherein the metal coordinating compound is 2-methylimidazole.

6. The method according to any one of claims 1 to 5, wherein the silica nanoclusters have a diameter of from 10 to 1000 nm.

7. Atomic M- and N-doped open-mesoporous carbon nanofibers obtained by the method according to any one of claims 1 to 6.

8. The atomic M- and N-doped open-mesoporous carbon nanofibers according to claim 7, wherein the BET surfaces area of the atomic M- and N-doped open-mesoporous carbon nanofibers is from 100 to 3000 m²/g.

9. The atomic M- and N-doped open-mesoporous carbon nanofibers according to claim 7 or 8, wherein the pore volume of the atomic M- and N-doped open-mesoporous carbon nanofibers is from 0.1 to 20 cm³/g.

10. The atomic M- and N-doped open-mesoporous carbon nanofibers according to any one of claims 7 to 9, wherein the mesopores have a diameter of from 1 to 100 nm.

11. The atomic M- and N-doped open-mesoporous carbon nanofibers according to any one of claims 7 to 10, wherein the content of N in the atomic M- and N-doped open-mesoporous carbon nanofibers is from 1.0 to 6.0 atom%.

12. The atomic M- and N-doped open-mesoporous carbon nanofibers according to any one of claims 7 to 11, wherein the content of the metal M in the atomic M- and N-doped open-mesoporous carbon nanofibers is from 0.10 to 5.0 atom%.

13. Use of the atomic M- and N-doped open-mesoporous carbon nanofibers according to any one of claims 7 to 12 as an oxygen electrode in metal-air batteries.

14. A metal-air battery comprising the atomic M- and N-doped open-mesoporous carbon nanofibers according to any one of claims 7 to 12 as an electrode.
